# EUROPEAN PATENT APPLICATION

(11) **EP 2 157 513 A1**
(43) Date of publication of application: **24.02.2010**
(21) Application number: 08751982.3
(22) Date of filing: 23.04.2008
(51) Int. Cl.: G06F 13/00, H04M 11/00

(54) **COMMUNICATION TERMINAL DEVICE**

(30) Priority: 08.05.2007 JP 2007123964
(71) Applicant: Sharp Kabushiki Kaisha, Osaka-shi, Osaka 545-8522 (JP)
(72) Inventor: OKAMOTO, Shuji, Osaka 545-8522 (JP); OHSAWA, Hiroshi, Osaka 545-8522 (JP)
(74) Representative: Müller - Hoffmann & Partner
(86) International application number: PCT/JP2008/057844
(87) International publication number: WO 2008/139870

(57) **Abstract**

A mobile phone (1) of the present invention includes a favorites management table (15) in which a URL of a website and a title of the website are stored so that the URL and the title are associated with each other. In a case where the title is selected, the mobile phone (1) establishes a connection with the website specified by the URL associated with the title. In the favorites management table (15), the last time and date when the mobile phone (1) was connected to the website specified by the title is stored so that the title and the last time and date when the mobile phone (1) was connected to the website are associated with each other. The mobile phone (1) further includes a control section (6) for causing the title, and a time period calculated, at predetermined timing, by finding a difference between the last time and date when the mobile phone (1) was connected to the website, stored in the favorites management table (15), and a current time and date, to be displayed together. Thereby, it is possible to prevent a user from forgetting to update the website or post a comment on the website.

## Description

### Technical Field

The present invention relates to a communication terminal device which, in a case where site specifying information specifying a website is selected, establishes a connection with the website specified by the site specifying information thus selected.

### Background Art

In recent years, there has been a significant increase in the number of community websites, such as social networking websites, and blog format websites. The following explains "blog" as an example of a community website.

A term "blog" is an abbreviation for a term "weblog", which is a term coined from a combination of terms "web" and "log (dairy)". Generally, a blog creator posts, on his blog, his own information or opinions about the society, current events, technical issues, or the like, his own experience, or his diary.

One of features of "blog" is a comment posting system via which a reader can post a comment on an article posted by the blog creator. This comment posting system allows a blog to provide an opportunity for communication or information exchange between a blog creator and blog readers, and between blog readers.

There are many kinds of community website, such as a blog on which people having a common hobby or similar tastes communicate with each other, and a blog on which co-workers or local citizens communicate with each other. As "blog" becomes popular, there has been an increase in the number of cases that one person takes part in a plurality of blogs.

Further, another feature of "blog" is significant easiness in posting an article, a comment, etc. For example, there has been already a system that allows a user to post an article, a comment, etc., on a blog via e-mail. With this system, a user can post an article, a comment, etc., by using an e-mail function of a mobile phone or the like, without starting up a personal computer, that is, the user can post an article, a comment, etc., on a blog even if the user is being away from home. Therefore, it has become common recently that a user posts a comment on a blog via a mobile terminal, such as a mobile phone.

Meanwhile, in a case where one user takes part in a plurality of blogs, there is a risk that the user is confused about when the user established a connection with which blog. Since a blog is a community on the Internet, a lot of people take part in/withdraw from a blog at a fast cycle. Therefore, if a user does not post a comment constantly, it is considered that the user drops out of the community (blog).

Further, in order to keep blog readers taking part in a blog, it is important for a blog creator to (i) periodically establish a connection with his blog to check comments posted by the blog readers, and (ii) periodically update his blog.

For this reason, for a blog in which a user hopes to continue to participate, or for a blog managed by the user himself, it is necessary for the user to frequently access the blog, post comments on the blog, and update the blog. However, in the case where the user takes part in a plurality of blogs, it is difficult for the user to frequently access all of the plurality of blogs. Particularly, in a case where the user accesses a blog via a mobile phone, the user generally has to pay a communication charge. Thus, in view of cost, too, it is also difficult for the user to frequently access a plurality of blogs.

On the other hand, on a terminal (such as a personal computer) having a function of establishing a connection with a website via the Internet, a web history is automatically recorded by a program (hereinafter, referred to as "browser") which establishes a connection with a website, and carries out browsing, information writing, or the like. Accordingly, a user can refer to the web history so as to confirm a history of his access to websites.

For example, the following Patent Literature 2 discloses a technique of using history information of a browser. Patent Literature 2, based on a fact that history information can be used as an index indicating tastes of users, discloses a technique of storing history information of the users in a server so as to use the history information for marketing.

Further, from a time when "blog" was not popular, an electronic bulletin board has been used as a website where, via the Internet, users exchange information or their opinions, or communicate with each other. In the same manner as a blog, if a user hopes to continue to take part in an electronic bulletin board, it is necessary for the user to periodically check the electronic bulletin board, and posted a comment or the like on the electronic bulletin board.

The following Patent Literature 1 discloses a conventional technique relevant to an electronic bulletin board, for example. The electronic bulletin board is operated such that a lot of comments or the like are posted on one electronic bulletin board. Therefore, it is difficult to take necessary information out of a large amount of information posted on the electronic bulletin board. In order to solve the problem, Patent Literature 1 discloses a technique in which a management server changes a color in which posted information is displayed, in accordance with a time period that elapsed since a time when the information was posted on and displayed on the electronic bulletin board. This allows a user who takes part in the electronic bulletin board to recognize which is new or old information among the information posted on the electronic bulletin board.

As described above, information required by the user who takes part in a website (such as a blog or an electronic bulletin board) that requires the user to periodically access the website is information of: the last time when the user visited such a website; and a time period that elapsed since the last time when the user visited such a website, or a time period that elapsed since the last time when the user posted a comment or the like on such a website. However, with the conventional technique, it has been difficult to confirm such information.

That is, the browser included in a terminal (personal computer, for example) having a function of establishing a connection with a website via the Internet allows only a history list to be displayed. Because of this, the user has to carry out inconvenient processing in order to obtain such information, and cannot find such desired information easily.

Specifically, a conventional browser stores history information, such as a time and date when the user accessed a website, in a predetermined data folder. In a case where the user views the history information, the browser searches for the data folder (of a personal computer) in which the history information is stored, and causes a history of his access to all the websites that the user has accessed to be displayed together, as a data list.

In other words, with the conventional browser, in a case where the user tries to confirm a time period that elapsed since the last time when the user accessed a website, it is difficult for the user to even extract a history of his access to the website out of a great amount of an access history.

That is, with the conventional browser, it is necessary to search for and display the history information stored in a personal computer. It is inconvenient for a user to follow such steps that (i) finding the history information, and then (ii) confirming the time period that elapsed since the last time when the user visited the website, or the time period that elapsed since the last time when the user posted a comment or the like on the website. For this reason, it has been difficult for the user to become aware of a website to which the user has not visited for a long time. As a result, there has been a problem that the user does not become aware of the website to which the user has not visited for a long time, and neglects the website without establishing a connection with the website.

### Citation List

### Patent Literature 1

Japanese Patent Application Publication, Tokukaihei, No. 04-61446 A (Publication Date: February 27, 1992)

### Patent Literature 2

Japanese Patent Application Publication, Tokukai, No. 2002-73458 A (Publication Date: March 12, 2002)

### Patent Literature 3

Japanese Patent Application Publication, Tokukai, No. 2005-339356 A (Publication Date: December 8, 2005)

### Summary of Invention

The present invention is made in view of the problem that a user does not become aware of a website to which the communication terminal device has not been connected for a long time. An object of the present invention is to realize a communication terminal device and the like, which can prevent a user from forgetting to update a website or post a comment on a website.

In order to attain the object, a communication terminal device of the present invention includes: a storage section in which (i) addresses of respective websites and pieces of site specifying information specifying the respective websites are stored so that the addresses and the respective pieces of site specifying information are associated with each other, and (ii) last dates or last times and dates when the communication terminal device was connected to the respective websites specified by the respective pieces of site specifying information are stored so that the respective pieces of site specifying information and the respective last dates or the respective last times and dates when the communication terminal device was connected to the respective websites are associated with each other; selection means for causing a user of the communication terminal device to select, among the pieces of the site specifying information, one of the pieces of site specifying information specifying a website to which the communication terminal device is to be connected; and control means for causing (i) the pieces of the site specifying information and (ii) only a last date or a last time and date when the communication terminal device was connected to a candidate website which is specified by the one of the pieces of site specifying information selected by the selection means, to be displayed together, the communication terminal device establishing a connection with one of the websites which is specified in accordance with a corresponding one of the addresses which is associated with a corresponding one of the pieces of site specifying information, in a case where the corresponding one of the pieces of site specifying information is selected.

With the arrangement, the pieces of the site specifying information specifying the respective websites are displayed, and simultaneously, by selecting one of the pieces of site specifying information specifying a website to which the communication terminal device is to be connected, the last date or the last time and date when the communication terminal device was connected to a candidate website which is specified by the one of the pieces of site specifying information selected is displayed.

Therefore, the user of the communication terminal device can easily confirm the last date or the last time and date when the communication terminal device was connected to the website specified by the site specifying information, and easily become aware of a website to which the communication terminal device has not been connected for a long time. Thereby, it is possible to prevent the user from forgetting to update a website, or post a comment on a website.

Further, with the arrangement, the last dates or the last times and dates when the communication terminal device was connected to the respective websites are stored in the storage section so that it is unnecessary to connect the communication terminal device to a website in order to cause such a last date or a last time and date to be displayed. Accordingly, the user does not have to connect the communication terminal device to the Internet in order to confirm the last date or the last time and date when the communication terminal device was connected to the website. This saves a communication charge.

Note that the last date or the last time and date the communication terminal device was connected to a website may be obtained by use of clocking means, such as a timer, when the communication terminal device is connected to the website. Further, the site specifying information is not particularly limited, as long as the site specifying information can specify a website. The site specifying information may be, for example, a title of the website. Furthermore, the site specifying information may be an image, such as an icon, or an address of the website.

Here, the address means information which indicates a location of the website, and is necessary for the communication terminal device to establish a connection with the website. The address includes, for example, an URL (Uniform Resource Locator), and an IP (Internet Protocol) address.

Further, in order to attain the object, a communication terminal device of the present invention includes: a storage section in which (i) addresses of respective websites and pieces of site specifying information specifying the respective websites are stored so that the addresses and the respective pieces of site specifying information are associated with each other, and (ii) last dates or last times and dates when the communication terminal device was connected to the respective websites specified by the respective pieces of site specifying information are stored so that the respective pieces of site specifying information and the respective last dates or the respective last times and dates when the communication terminal device was connected to the respective websites are associated with each other; selection means for causing a user of the communication terminal device to select, among the pieces of the site specifying information, one of the pieces of site specifying information specifying a website to which the communication terminal device is to be connected; clocking means for clocking a current date or a current time and date; and control means for causing (i) the pieces of site specifying information and (ii) elapsed time period information to be displayed together, the elapsed time period information being obtained by finding, at predetermined timing, a difference between (a) a last date or a last time and date when the communication terminal device was connected to a candidate website which is specified by the one of the pieces of site specifying information selected by the selection means and (b) the current date or the current time and date, which is clocked by the clocking means, respectively, the communication terminal device establishing a connection with one of the websites which is specified in accordance with a corresponding one of the addresses which is associated with a corresponding one of the pieces of site specifying information, in a case where the corresponding one of the pieces of site specifying information is selected.

With the arrangement, the pieces of site specifying information specifying the respective websites are displayed, and simultaneously, the elapsed time period information indicating a time period that elapsed since the last date or the last time and date when the communication terminal device was connected to the website specified by one of the pieces of site specifying information is displayed. This allows the user of the communication terminal device to easily confirm the time period that elapsed since the last time when the communication terminal device was connected to the website specified by one of the pieces of site specifying information.

Accordingly, the user of the communication terminal device can easily become aware of a website to which the communication terminal device has not been connected for a long time. Thereby, it is possible to prevent the user from forgetting to update the website or post a comment on the website.

Further, with the arrangement, the elapsed time period information is calculated by finding a difference between the last date or the last time and date (stored in the storage section) when the communication terminal device was connected to a website, and the current date or the current time and date. That is, it is unnecessary to connect the communication terminal device to the website in order to display the elapsed time period information, so that a communication charge for the Internet connection is not be generated in confirming the time period that elapsed since the last time when the communication terminal device was connected to the website.

It should be noted that a timer or the like can be used as the clocking means. Further, the time period that elapsed since the last time when the communication terminal device was connected to the website may be calculated when the site specifying information is displayed, or may be calculated at predetermined intervals, such as every 12 hours or every other day.

The elapsed time period information is not particularly limited, as long as the time period that elapsed since the last time when the communication terminal device was connected to a website is visibly perceivable to the user. The elapsed time period information may be displayed in numerical terms, or as an image indicating how long the elapsed time period is. The image indicating how long the elapsed time period is may be a mark which changes in color as the time passes, or an icon which changes in shape as the time passes.

Further, it is possible to, in accordance with the elapsed time period, change the color in which the site specifying information is displayed, or change displayed content of the site specifying information. This allows the user to know the elapsed time period only by viewing the site specifying information. For example, in a case where the site specifying information is an icon, it is possible to allow the user to notice the elapsed time period, by changing the shape of the icon, or the color of the icon.

Furthermore, the site specifying information may be, for example, displayed in such a manner that a list of site specifying information is displayed. By displaying the list of site specifying information, it is possible to allow the user to easily confirm the elapsed time period information of a plurality of site specifying information. Further, as to a website that the user particularly pays attention to, it is preferable to display the site specifying information, such as an icon, as a background image of a display screen of the communication terminal device. This can allows the user to easily confirm the elapsed time period information of the website that the user particularly pays attention to, and also prevent the user from forgetting to update such a website or post a comment on such a website more successfully.

It should be noted that the elapsed time period information, the last date when the communication terminal device was connected to the website, and the last time and date when the communication terminal device was connected to the website may be displayed for the respective websites specified by the respective pieces of site specifying information stored in the storage section, or displayed for only a website specified by a piece of site specifying information selected by the user, or a website specified by a piece of site specifying information selected by the user.

In a case where the elapsed time period information and the like are displayed for the respective websites specified by the respective pieces of site specifying information stored in the storage section, there is an advantage that the user can confirm, at once, the elapsed time period information of the respective websites, the last dates when the communication terminal device was connected to the respective websites or the last times and dates when the communication terminal device was connected to the respective websites.

On the other hand, in a case where the elapsed time period information and the like are displayed for only the candidate website specified by a piece of site specifying information selected by the user, there is an advantage that the user can easily view the elapsed time period information even in a small display screen of a communication terminal device.

Further, in order to attain the object, a communication terminal device of the present invention includes: a storage section in which (i) addresses of respective websites and pieces of site specifying information specifying the respective websites are stored so that the addresses and the respective pieces of site specifying information are associated with each other, (ii) last dates or last times and dates when the communication terminal device was connected to the respective websites specified by the respective pieces of site specifying information are stored so that the respective pieces of site specifying information and the respective last dates or the respective last times and dates when the communication terminal device was connected to the respective websites are associated with each other, and (iii) writer specifying information specifying a user, in a case where the user of the communication terminal device carries out writing on one of the websites specified by the respective pieces of site specifying information, is stored so that each of the pieces of site specifying information and the writer specifying information are associated with each other; and control means for causing (i) the writer specifying information and (ii) elapsed time period information to be displayed, the elapsed time period information being obtained by finding, at predetermined timing, a difference between (a) a last date or a last time and date when the communication terminal device was connected to the website which is specified by the writer specifying information and (b) a current date or a current time and date, respectively, the communication terminal device establishing a connection with one of the websites which is specified in accordance with a corresponding one of the addresses which is associated with a corresponding one of the pieces of site specifying information, in a case where the corresponding one of the pieces of site specifying information is selected.

With the arrangement, the writer specifying information and the elapsed time period information are displayed for each of the websites, so that the user of the communication terminal device can easily confirm the time period that elapsed since the last time when the communication terminal device was connected to the website specified by the site specifying information.

Therefore, it is possible to allow the user of the communication terminal device to easily become aware of a website to which the communication terminal device has not been connected for a long time, and prevent the user from forgetting to update the website or post a comment on the website.

Here, in a case where a user carries out writing on a website, such as an electronic bulletin board or a blog, the user generally uses a nickname (handle name) as the writer specifying information for specifying a writer. It is undesirable that a user forgets to update the website or post a comment on the website, particularly, in the case of a website on which writing can be carried out, such as an electronic bulletin board and a blog.

That is, with the arrangement, the user of the communication terminal device can easily confirm the elapsed time period information of such a website that if the user forgets to update the website or post a comment on the website, undesirable situation may be caused. Further, even in a case where the user forgets which writer specifying information is used for which website, it is possible for the user to smoothly carry out writing by use of the writer specifying information thus displayed.

Further, in order to attain the object, a communication terminal device of the present invention includes: a storage section in which (i) addresses of respective websites and pieces of site specifying information specifying the respective websites are stored so that the addresses and the respective pieces of site specifying information are associated with each other, and (ii) last dates or last times and dates when a user of the communication terminal device carried out writing on the respective websites specified by the respective pieces of site specifying information are stored so that the respective pieces of site specifying information and the respective last dates or the respective last times and dates when the user carried out writing on the respective websites are associated with each other; control means for causing (i) the pieces of site specifying information and (ii) the last dates or the last times and dates when the user carried out writing on the respective websites specified by the respective pieces of site specifying information, to be displayed together, the communication terminal device establishing a connection with one of the websites which is specified in accordance with a corresponding one of the addresses which is associated with a corresponding one of the pieces of site specifying information, in a case where the corresponding one of the pieces of site specifying information is selected.

Among websites, there is a website on which a user can carry out writing, such as an electronic bulletin board and a blog. With the arrangement, the pieces of site specifying information and the last dates or the last times and dates when the user carried out writing on the respective websites specified by the site specifying information, are displayed together, so that the user of the communication terminal device can easily become aware of the last date or the last time and date when the user carried out writing on each of the websites specified by the pieces of site specifying information. Further, the last date or the last time and date when the user carried out writing on the website specified by the site specifying information is stored in the storage section, so that it is unnecessary to connect the communication terminal device to the website in order to display the last date or the last time and date when the user carried out writing on the website specified by the site specifying information.

Therefore, it is possible to allow the user of the communication terminal device to easily become aware of a website on which the user has not carried out writing for a long time, and prevent the user from forgetting to update the website or post a comment on the website.

Further, in order to attain the object, a communication terminal device of the present invention includes: a storage section in which (i) addresses of respective websites and pieces of site specifying information specifying the respective websites are stored so that the addresses and the respective pieces of site specifying information are associated with each other, and (ii) dates when the communication terminal device was connected to the respective websites specified by the respective pieces of site specifying information are stored so that the respective pieces of site specifying information and the respective dates when the communication terminal device was connected to the respective websites are associated with each other; selection means for causing a user of the communication terminal device to select, among the pieces of the site specifying information, one of the pieces of site specifying information specifying a website to which the communication terminal device is to be connected; and control means for causing dates when the communication terminal device was connected to a candidate website specified by the one of the pieces of site specifying information selected by the selection means to be displayed in a form of calendar, the communication terminal device establishing a connection with one of the websites which is specified in accordance with a corresponding one of the addresses which is associated with a corresponding one of the pieces of site specifying information, in a case where the corresponding one of the pieces of site specifying information is selected.

With the arrangement, the pieces of site specifying information specifying the respective website are displayed. By selecting, by the selection means, one of the pieces of site specifying information specifying the candidate website, each date on which the communication terminal device was connected to the candidate website is displayed in the form of a calendar.

This allows the user of the communication terminal device to easily check the last date when the communication terminal device was connected to the website specified by the site specifying information, or how often the communication terminal device was connected to the website. Accordingly, it is possible to allow the user of the communication terminal device to easily become aware of a website to which the communication terminal device has not been connected for a long time, and prevent the user from forgetting to update the website or post a comment on the website.

Further, with the arrangement, each date (stored in the storage section) on which the communication terminal device was connected to the website is displayed, so that it is unnecessary to connect the communication terminal device to the website in order to display each date on which the communication terminal device was connected to the website. Accordingly, in order to check each date on which the communication terminal device was connected to the website, the user does not have to connect the communication terminal device to the Internet and therefore a communication charge for the Internet connection is not generated.

It should be noted that, a method of displaying each date on which the communication terminal device was connected to the website may be, for example, such that a one-month calendar showing dates including the date when the communication terminal device was connected to the website is displayed, and, among the dates of the month, each date on which the communication terminals device was connected to the website is displayed with a mark or the like on the calendar. The calendar thus displayed is not particularly limited, as long as the calendar includes the date the communication terminal device was connected to the website, and can be viewed by the user easily. For example, the calendar may be a calendar of a month, 2 months, 6 months, or one year. Further, the date when the communication terminal device was connected to the website may be obtained by clocking means, such as a timer, when the communication terminal device is connected to the website.

Additional objects, features, and strengths of the present invention will be made clear by the description below. Further, the advantages of the present invention will be evident from the following explanation in reference to the drawings.

### Brief Description of Drawings

Fig. 1

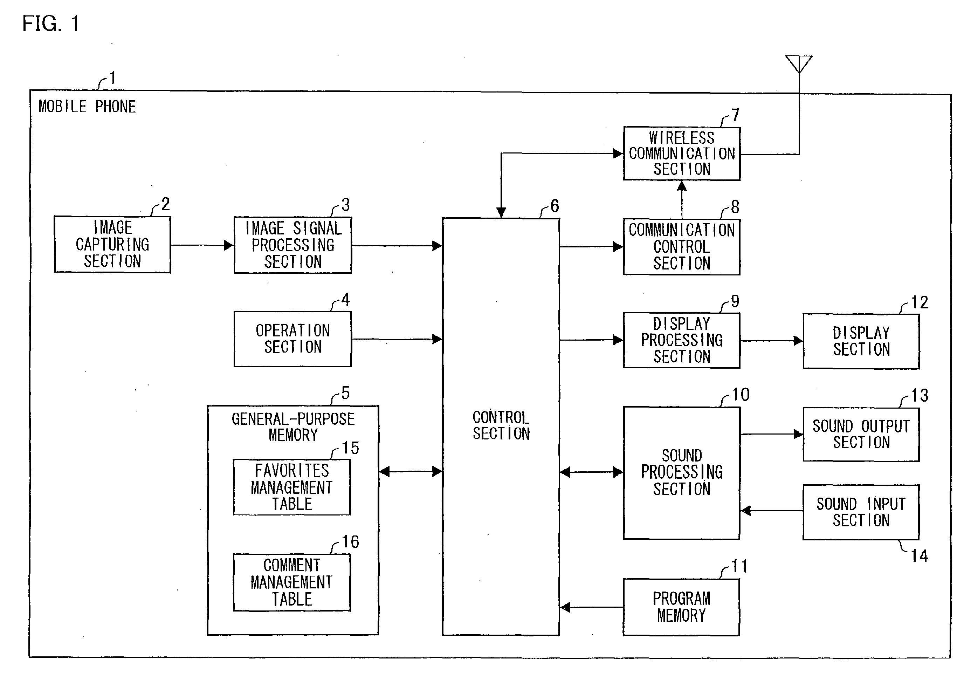

   Fig. 1 is a block diagram illustrating a main arrangement of a mobile phone in accordance with an embodiment of the present invention.
Fig. 2

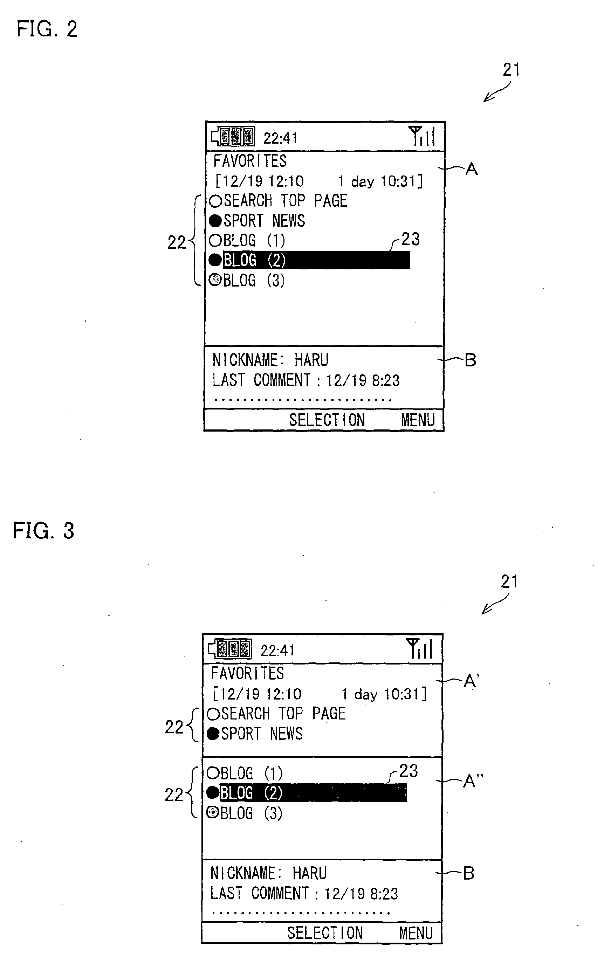

   Fig. 2 is a view illustrating an example of a favorites screen displayed on the mobile phone.
Fig. 3
   Fig. 3 is a view illustrating another example of the favorites screen displayed on the mobile phone.
Fig. 4

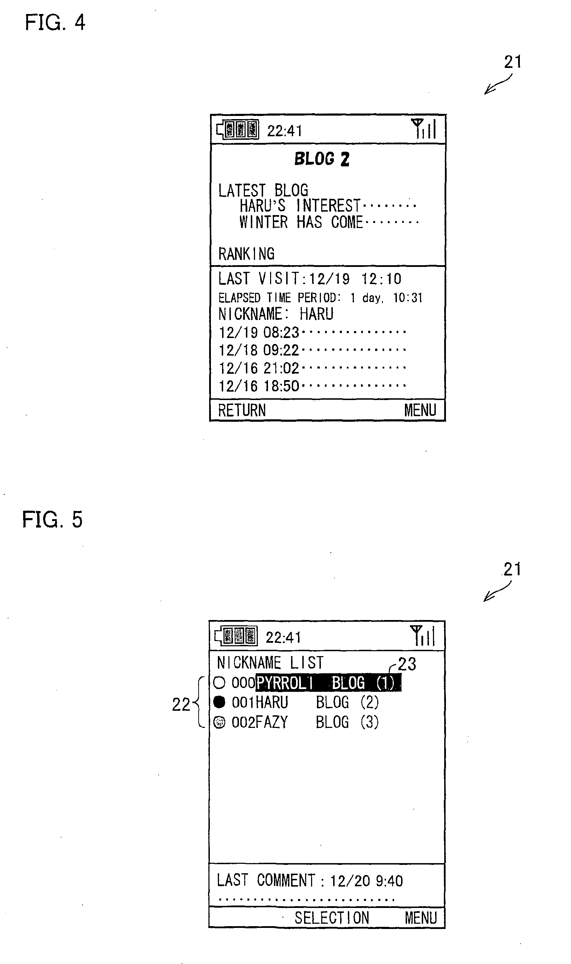

   Fig. 4 is a view illustrating an example of a display screen of the mobile phone, in a case where the mobile phone has established a connection with "Blog (2)" by selecting "Blog (2)" on the favorites screen.
Fig. 5
   Fig. 5 is a view of an example of the display screen of the mobile phone, illustrating a display example of a nickname list.
Fig. 6

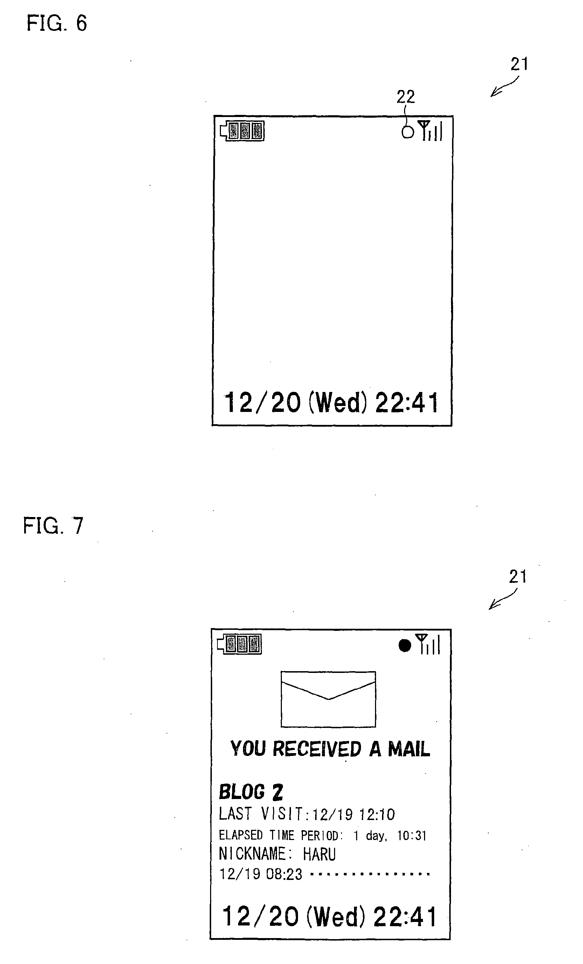

   Fig. 6 is a view of an example of the display screen of the mobile phone, illustrating an example of a standby screen.
Fig. 7
   Fig. 7 is a view of an example of the display screen of the mobile phone, illustrating a display screen in a case where the mobile phone receives an e-mail from a blog.
Fig. 8

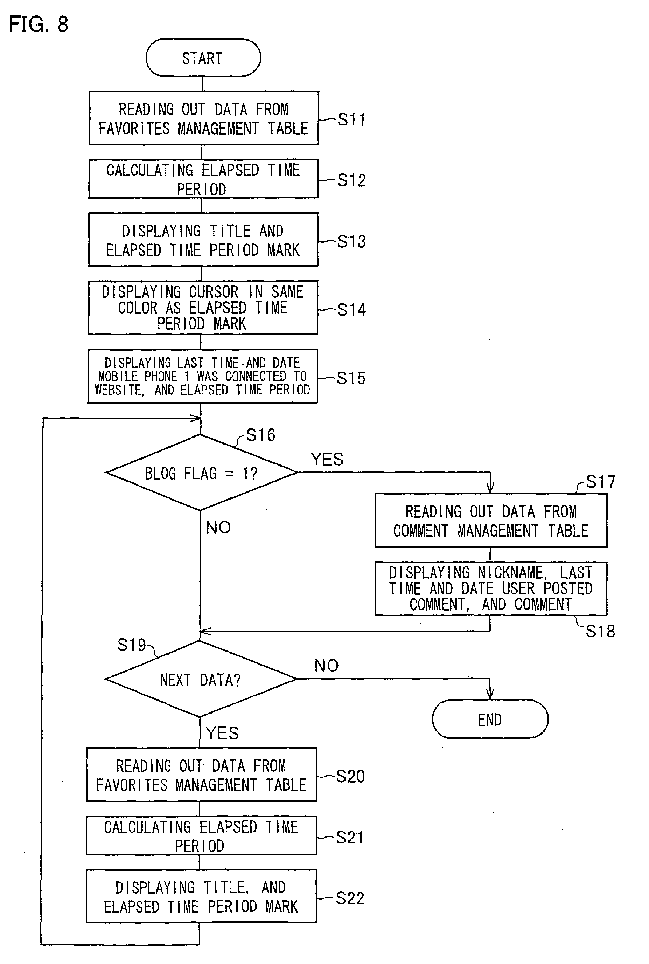

   Fig. 8 is a flow chart illustrating an example of display processing which is carried out in a case where the favorites screen is displayed on the mobile phone.
Fig. 9

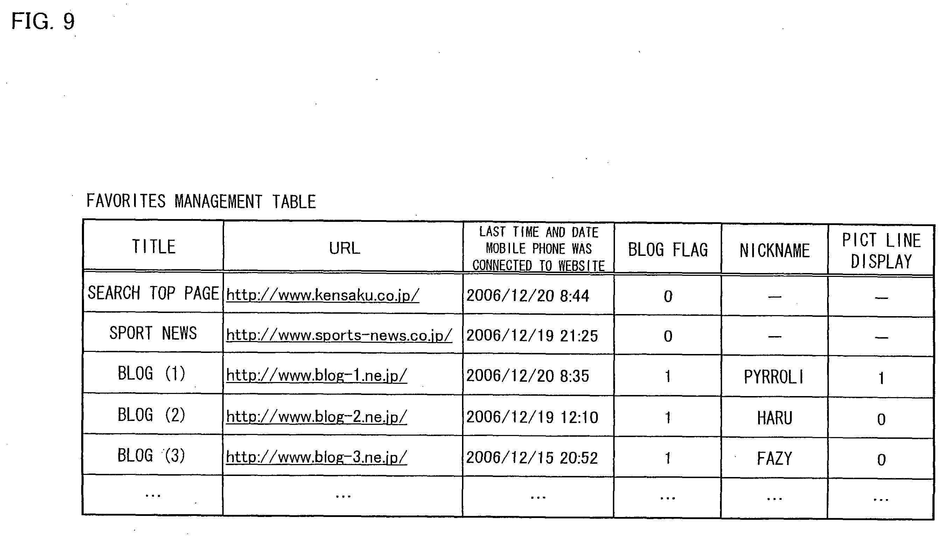

   Fig. 9 is a view illustrating an example of a favorites management table which is stored in the mobile phone.
Fig. 10

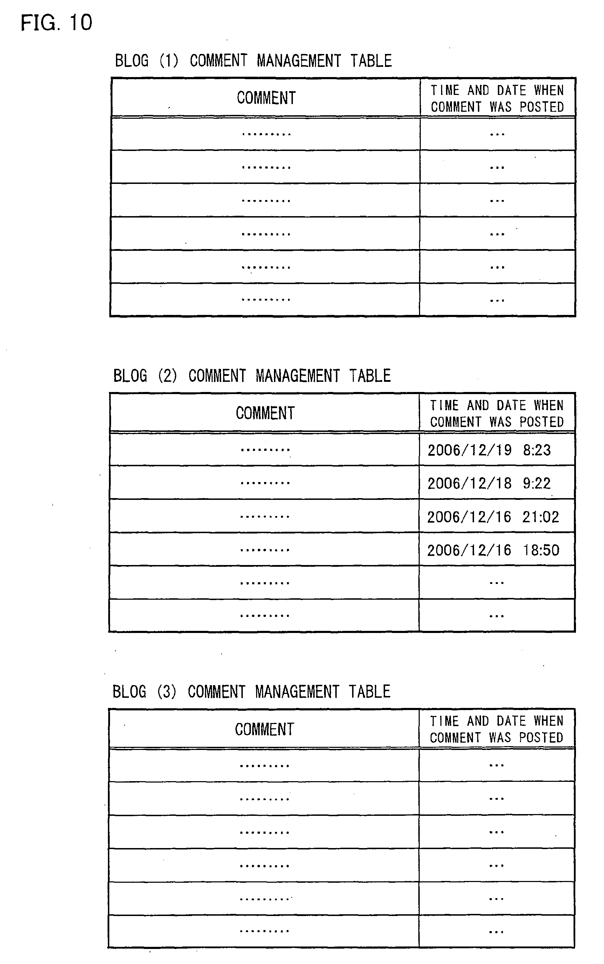

   Fig. 10 is a view illustrating an example of a comment management table which is stored in the mobile phone.
Fig. 11

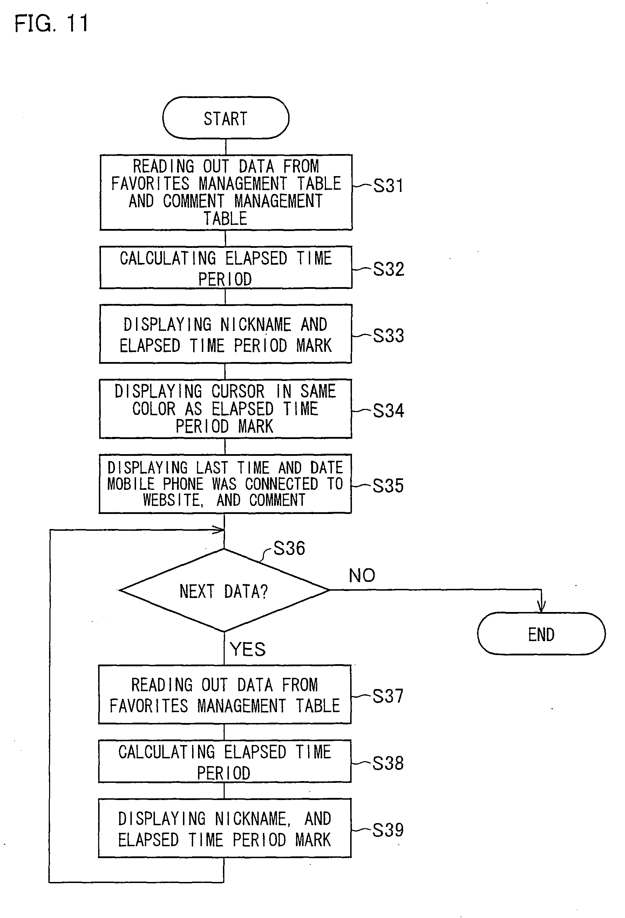

   Fig. 11 is a flow chart illustrating an example of display processing which is carried out in a case where the nickname list is displayed on the mobile phone.
Fig. 12

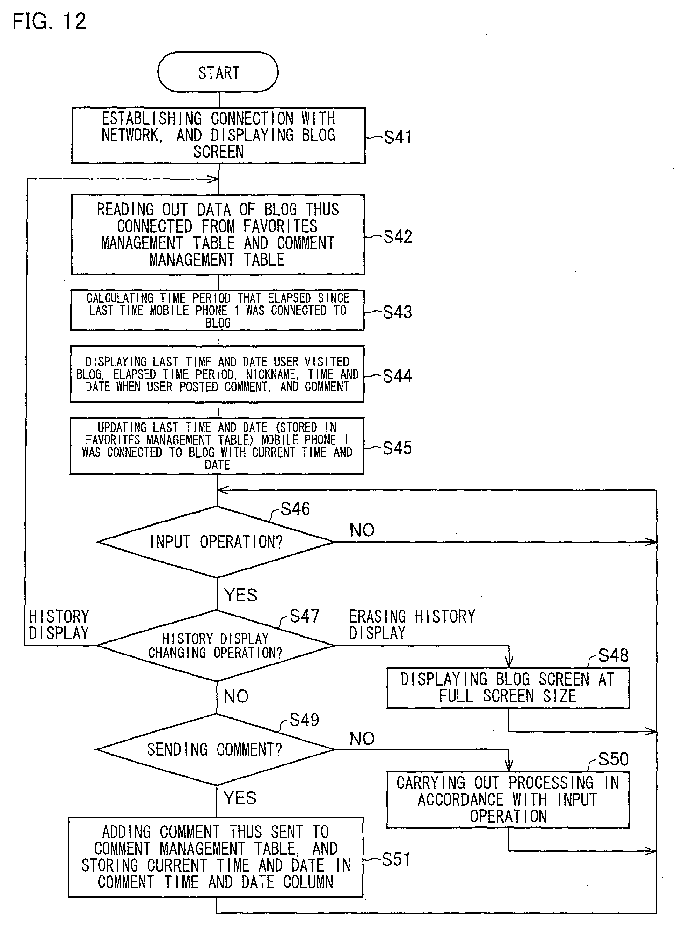

   Fig. 12 is a flow chart illustrating an example of display processing which is carried out in a case where a blog screen is displayed on the mobile phone.
Fig. 13

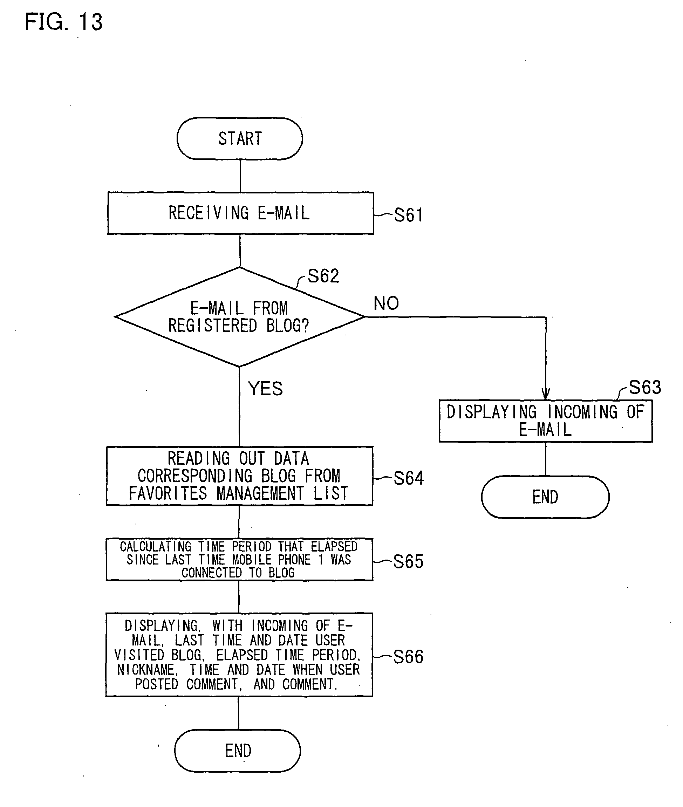

   Fig. 13 is a flow chart illustrating an example of processing which is carried out in a case where the mobile phone receives an e-mail.
Fig. 14

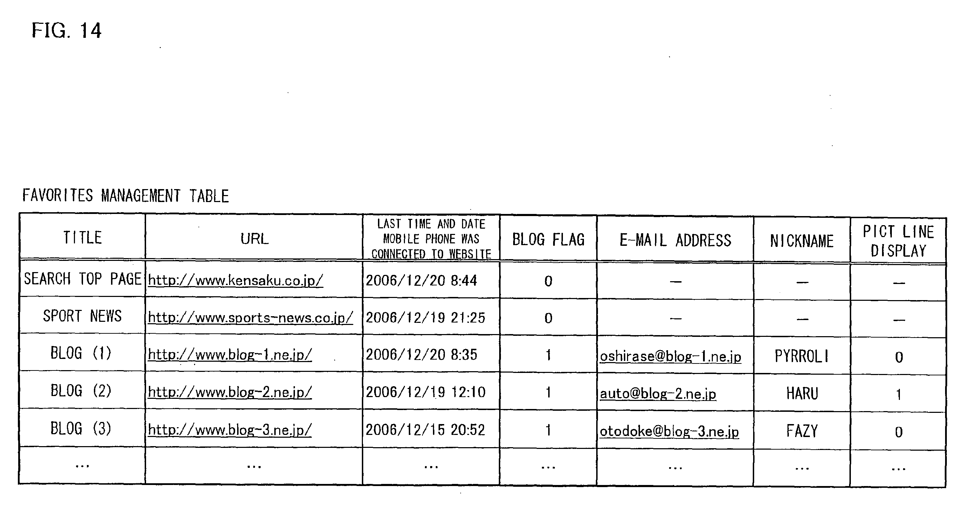

   Fig. 14 is a view illustrating another example of the favorites management table which is stored in the mobile phone.
Fig. 15

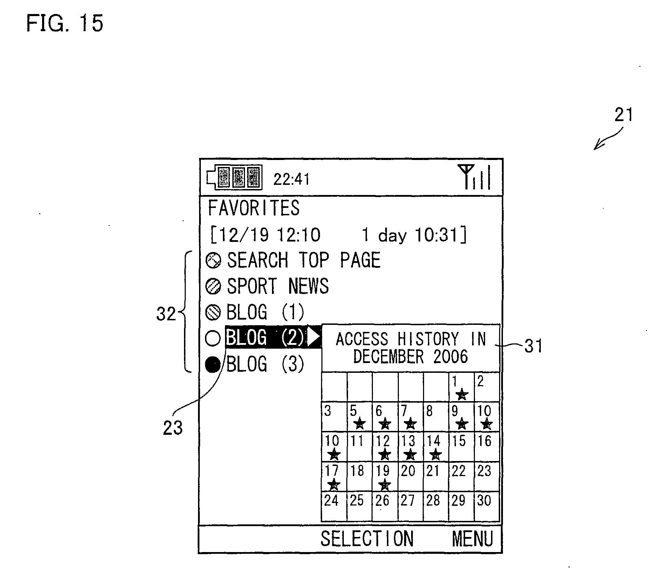

   Fig. 15 is a view of a modified example of the present invention, illustrating an example of the display screen in a case where a history of access to a website corresponding to a title to which a cursor is pointed, is displayed on a calendar.
Fig. 16

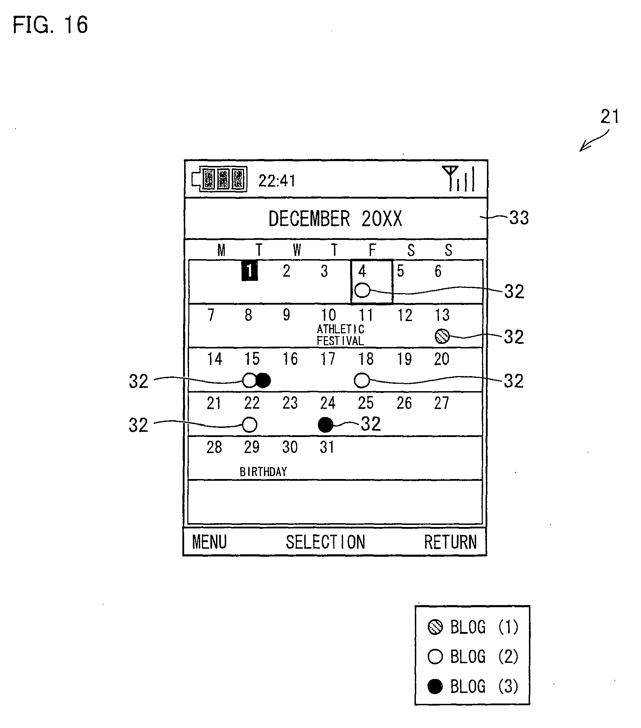

   Fig. 16 is a view illustrating an example of a calendar thus displayed in the modified example.
Fig. 17

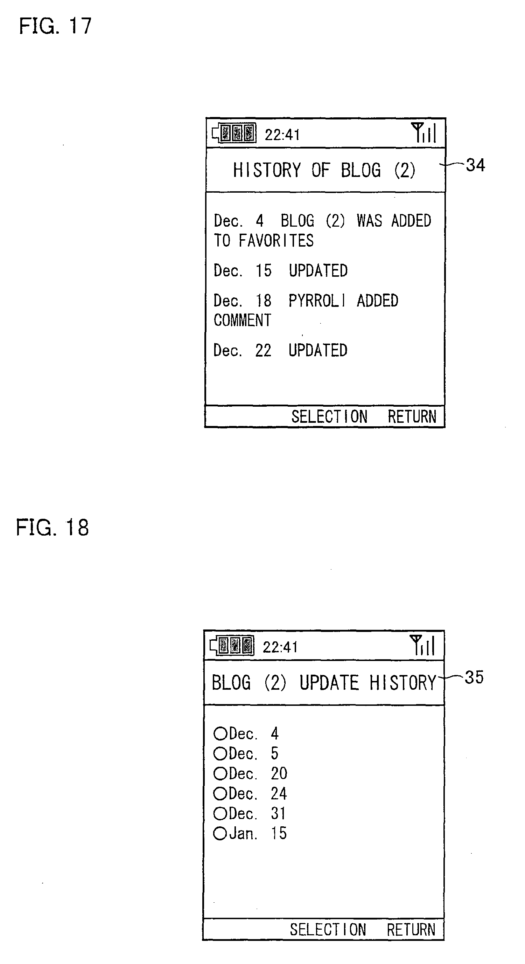

   Fig. 17 is a view illustrating a display example of a content of an update in the modified example.
Fig. 18
   Fig. 18 is a view illustrating an example of a history display screen on which only an update history is displayed, in the modified example.
Fig. 19

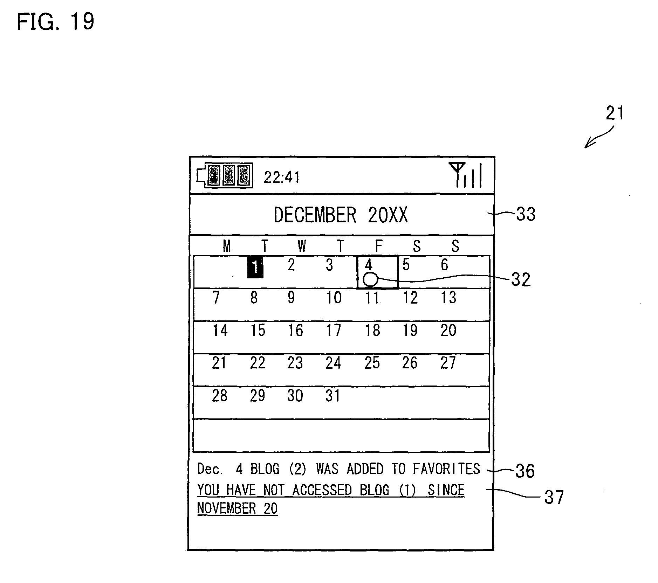

   Fig. 19 is a view illustrating an example of the display screen on which a content of an update, indicated by an icon displayed on the calendar, and the calendar are displayed together.
Fig. 20

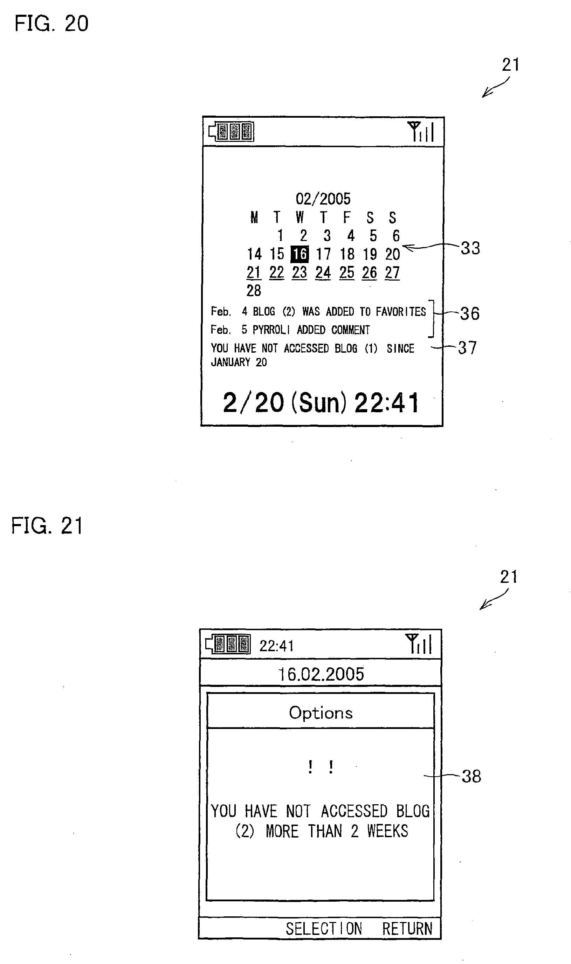

   Fig. 20 is a view illustrating an example of a standby screen in the modified example.
Fig. 21
   Fig. 21 is a view illustrating a display example of a message informing a user that a reminder period elapsed.

### Reference Signs List

1. MOBILE PHONE
5. GENERAL-PURPOSE MEMORY (STORAGE SECTION)
6. CONTROL SECTION (CONTROL MEANS, HISTORY OBTAINING MEANS)
15. FAVORITES MANAGEMENT TABLE
16. COMMENT MANAGEMENT TABLE
21. DISPLAY SCREEN
22. ELAPSED TIME PERIOD MARK
23. CURSOR (SELECTION MEANS)
31. CALENDAR
32. ICON (SITE SPECIFYING INFORMATION)
33. CALENDAR

### Description of Embodiments

One embodiment of the present invention is described below with reference to Figs. 1 through 14. Fig. 1 is a block diagram illustrating a main arrangement of a mobile phone of the present embodiment. As illustrated in Fig. 1, a mobile phone 1 includes: an image capturing section 2; an image signal processing section 3; an operation section 4; a general-purpose memory (storage section) 5; a control section (control means) 6; a wireless network section 7; a communication control section 8; a display processing section (control means) 9; a sound processing section 10; a program memory 11; a display section 12; a sound output section 13; and a sound input section 14.

The present embodiment explains an example where a communication terminal device of the present invention is applied to a mobile phone. However, the present invention is not limited to this, and is applicable to a personal computer, a PDA (Personal Digital Assistance), a PHS (Personal Handy Phone System), and the like.

The image capturing section 2 is used to take a photograph. The image capturing section 2 transmits, to the image signal processing section 3, a signal loaded in a light receiving element via a lens (not illustrated). Then, the image signal processing section 3 transmits, to the control section 6, the signal thus received from the image capturing section 2, as an image signal. It should be noted that the image signal received from the image capturing section 2 and the image signal processing section 3 is stored in the general-purpose memory 5 as still-image information or moving-image information, if necessary. The still-image information or the moving-image information, stored in the general-purpose memory 5, can be displayed on the display section 12, or can be transmitted to another communication terminal via communication means, that is, the communication control section 8, the wireless network section 7, and the like.

The operation section 4 is used to operate the mobile phone 1. The operation section 4 is constituted by input keys including: a selection key for selecting an item displayed on the display section 12; a decision key for making a decision in selecting the item; an input key for inputting numbers or characters; and the like. The operation section 4 transmits an input made via the input keys to the control section 6, as an input signal.

The general-purpose memory 5 stores various data which is used in the mobile phone 1. As illustrated in Fig. 1, a favorites management table 15, and a comment management table 16 are stored in the general-purpose memory 5. Details of the favorites management table 15 and the comment management table 16 will be described later. Further, the still-image information and the moving-image information, which are received from the image capturing section 2 and the image signal processing section 3, are also stored in the general-purpose memory 5.

The control section 6 controls an entire operation of the mobile phone 1 by controlling an operation of each component of the mobile phone 1. It should be noted that details of the control carried out by the control section 6 will be described later.

The wireless network section 7 transmits/ receives an electric wave. Specifically, the wireless network section 7 transmits / receives an electric wave along with sending/ receiving an e-mail, a call via a mobile phone network, an access to a website, or the like. The communication control section 8 generates, in accordance with an instruction received from the control section 6, data which will be transmitted from the wireless network section 7. It should be noted that the data transmitted from the wireless network section 7 is data of an e-mail, data of a call, data of a URL which is necessary for an access to a website, or the like.

The display processing section 9 generates display data in accordance with an instruction received from the control section 6, and transmits the display data thus generated to the display section 12. Thereby, the display processing section 9 causes the display section 12 to display images (still images or moving images).

The sound processing section 10 generates sound data in accordance with an instruction received from the control section 6, and transmits the sound data to the sound output section 13. Thereby, the sound processing section 10 causes the sound output section 13 to output a sound. Further, the sound processing section 10 converts a sound inputted into the sound input section 14 into a certain data format which is recognizable to the control section 6, and transmits the sound in such a format to the control section 6.

The program memory 11 stores various programs which are used by the control section 6. Further, the display section 12 includes a display screen (not illustrated), and displays, on the display screen, the display data received from the display processing section 9. The sound output section 13 includes a speaker (not illustrated), and outputs, via the speaker, the sound data received from the sound processing section 10. The sound input section 14 includes a microphone (not illustrated), and converts a sound inputted into the microphone into a sound signal. The sound input section 14 transmits the sound signal to the sound processing section 10.

The mobile phone 1 of the present embodiment is thus arranged, so that the mobile phone 1 can allow a user to carry out various operations, such as a call, a browse through a website, transmitting/receiving an e-mail, a photo shoot, and the like.

Further, the mobile phone 1 has a function called "favorites". The favorites function, also called "bookmark" function, is such a function that a user can access a certain website without inputting an URL of the certain website, if the user registers the certain website in a favorites list in advance.

In the mobile phone 1, by operating the operation section 4, a user can display a favorites screen in which a list of titles of websites registered in the favorites list is displayed. Further, by selecting, via the operation section 4, a title of a website displayed in the list on the favorites screen, the user can access the website.

Fig. 2 is a display example of the favorites screen. As illustrated in Fig. 2, the favorites screen is divided into two regions, that is, a region A and a region B. In the region A, a list of titles of the websites registered in the favorites list by the user of the mobile phone 1 is displayed. In Fig. 2, the titles are "Search Top Page", "Sport News", "Blog (1)" and the like.

Further, on a left side of each of the titles of the websites, an elapsed time period mark 22 is displayed. As illustrated in Fig. 2, elapsed time period marks 22 are displayed in various colors, and each color in which an elapsed time period mark 22 is displayed indicates a time period that elapsed since the last time and date when the user visited a website corresponding to the elapsed time period mark 22. Therefore, the user can check an approximate elapsed time period by recognizing a color of an elapsed time period mark 22.

For example, if a time period that elapsed since the last time and date when the user visited a website is within 24 hours, the elapsed time period mark 22 is displayed in blue, if the time period that elapsed since the last time and date when the user visited the website is more than 24 hours but not more than 72 hours, the elapsed time period mark 22 is displayed in yellow, and if the time period that elapsed since the last time and date when the user visited the website is not less than one week, the elapsed time period mark 22 is displayed in red. In this case, the user can see at once that the time period that elapsed since the last time and date when the user visited the website having the title to which a blue elapsed time period mark 22 is attached is within 24 hours.

In the region A, a cursor (selection means) 23 is displayed in such a manner that the cursor 23 and one of the titles of the websites overlap each other. The user can move the cursor 23 on the display screen by operating the operation section 4. In the example of Fig. 2, the cursor 23 and "Blog (2)" overlap each other.

The mobile phone 1 accesses, via the Internet, a website to which the cursor 23 is pointed, in such a manner that (i) the user moves the cursor 23 so that the cursor 23 and a title of a website overlap each other, and then (ii) the user operates the decision key of the operation section 4. That is, in the mobile phone 1, (i) the cursor 23 and one of the titles are caused to overlap each other so that a target website is provisionally selected, and (ii) on a condition where the cursor 23 and the title corresponding to the target website overlap each other, the decision key is operated so that a candidate website is selected.

It should be noted that a method of selecting a candidate website by use of the titles of the websites is not limited to the use of the cursor 23. For example, it is possible to enlarge and display the title corresponding to the candidate website so that the title is displayed larger than the other titles, or displaying the title corresponding to the candidate website in a color different from a color in which the other titles are displayed.

Further, when the cursor 23 and a title of a website overlap each other, a color in which the cursor 23 is displayed is changed into a color in which the elapsed time period mark 22 attached to the title of the website is displayed. That is, the cursor 23 is displayed in accordance with a time period that elapsed since the last time and date when the mobile phone 1 was connected to the website corresponding to the title to which the cursor 23 is pointed.

This is such a preferable arrangement that the user can more easily become aware of a time period that elapsed since the last time and date when the mobile phone 1 was connected to a website. It should be noted that the mobile phone 1 is not limited to the arrangement in which the cursor 23 and the elapsed time period mark 22 are displayed in the same color.

Here, on the mobile phone 1, (i) the last time and date when the mobile phone 1 was connected to the website having the title to which the cursor 23 is pointed, and (ii) the time period that elapsed since the last time and date when the mobile phone 1 was connected to the website, are displayed. For example, in Fig. 2, the last time and date when the mobile phone 1 was connected to the website is displayed as "12/ 19, 12:10", and the time period that elapsed since the last time and date when the mobile phone 1 was connected to the website is displayed as "1 day, 10:31". Accordingly, in this example, it can be seen that the mobile phone 1 was connected to Blog (2) at 12:10 on December 19, and after that, the mobile phone 1 has not been connected to Blog (2) for one day and 10 hours 31 minutes.

As described above, on the mobile phone 1, even if the user does not access the website, the time period that elapsed since the last time when the mobile phone 1 was connected to the website is displayed. Thereby, the user can periodically access the website registered in the favorites list, by referring to such an elapsed time period.

It should be noted that Fig. 2 illustrates an embodiment in which the last time and date when the mobile phone 1 was connected to the website is displayed. However, it is possible to have another arrangement in which not the last time and date when the mobile phone 1 was connected to the website but only the time period that elapsed since the last time and date when the mobile phone 1 was connected to the website is displayed. However, it is preferable to display the last time and date when the mobile phone 1 was connected to the website, because by displaying the last time and date when the mobile phone 1 was connected to the website, it becomes possible for the user to easily become aware of what time and date the user accessed the website.

Further, in Fig. 2, the time period that elapsed since the last time and date when the mobile phone 1 was connected to the website is expressed in numerical terms. However, the method of displaying the time period that elapsed since the last time and date when the mobile phone 1 was connected to the website is not limited to this, and may be carried out in any way as long as the user can become aware of the time period that elapsed since the last time and date when the mobile phone 1 was connected to the website. For example, it is possible to display an image (such as an icon) for indicating the time period that elapsed since the last time and date when the mobile phone 1 was connected to the website so as to allow the user to become aware of the time period that elapsed since the last time and date when the mobile phone 1 was connected to the website.

Further, as illustrated in Fig. 2, a nickname is displayed in the region B. A nickname, often called "handle name", is a name used by a user to specify the user himself in carrying out writing on a website. In recent years, various sites for communication, such as an electronic bulletin board and a blog, have been provided on the Internet. Along with this, it has become common that one user carries out writing on a plurality of blogs or electronic bulletin boards by using a plurality of nicknames (handle names), independently.

In this case, the user who carries out the writing on a plurality of blogs or electronic bulletin boards by using nicknames for respective blogs or electronic bulletin boards often forgets which nickname is used on which blog or which electronic bulletin board. Conventionally, it has been necessary for a user to access a blog or an electronic bulletin board in order to confirm his nickname used on the blog or the electronic bulletin board.

In view of this problem, in the mobile phone 1, each nickname used on each website registered in the favorites list is stored, and displayed on the favorites screen. This allows the user to confirm, on the favorites screen, which nickname is used on which website, without accessing the website.

Further, in the region B, the last time and date when the user posted a comment (last comment) on a website, and a content of the last comment are displayed. The content of the last comment is a content of writing carried out by the user on a website last time. This allows the user to confirm, without accessing the website, what comment the user posted on the website last time.

Further, the favorites screen is not limited to the example of Fig. 2, and may be a screen illustrated in Fig. 3, for example. Fig. 3 is a view illustrating another example of the favorites screen. The favorites screen illustrated in Fig. 3 is such a screen that the screen is divided into three regions, i.e. a region A', a region A", and a region B.

The regions A' and A" are such regions that the region A illustrated in Fig. 2 is divided into two regions. In the region A", among the websites displayed in the region A, only comment writable websites are displayed, that is, a blog, an electronic bulletin board, and the like. This allows the user to (i) easily become aware of a blog, an electronic bulletin board, or the like, which requires the user to carry out writing thereon, among the websites registered in the favorites list, and (ii) easily select such a blog or an electronic bulletin board.

It should be noted that, in the example of Fig. 3, the blog, the electronic bulletin board, and the like, which require the user to carry out writing thereon, are distinguished from the other websites with the screens thus divided, but the method of distinguishing the blog, the electronic bulletin board, and the like, which require the user to carrying out writing thereon, from the other websites is not limited to this example. For example, it is possible to distinguish such a blog, an electronic bulletin board, and the like, from the other websites by displaying the blog, the electronic bulletin board, and the like in a color different from a color in which the other websites are displayed.

Next, the following description explains a display example in a case where the user accesses a writable website (such as a blog) on which the user can carry out writing, with reference to Fig. 4. Fig. 4 illustrates an example of a screen which is displayed in a case where the user accesses Blog (2) by selecting Blog (2) on the favorites screen illustrated in Fig. 2 or Fig. 3.

As illustrated in Fig. 4, when the user accesses Blog (2), a display screen 21 is divided into an upper screen and a lower screen. The upper screen of the display screen 21 displays Blog (2), and the lower screen of the display screen 21 displays: the last time and date the user visited Blog (2); a time period that elapsed since the last time and date when the user visited Blog (2) to this time the user visited Blog (2); a user's nickname used on Blog (2); and a history of user's comments on Blog (2).

If a predetermined time period elapses, the lower screen will automatically stop displaying the last time and date when the user visited Blog (2), and the like, which are being displayed on the lower screen. Then, Blog (2) is displayed all over the display screen 21. It should be noted that it is possible for the user to by carrying out an input operation, (i) re-display the last time and date when the user visited Blog (2), and the like, which have already been not displayed on the lower screen, or also (ii) stop displaying, on the lower screen, the last time and date when the user visited Blog (2), and the like, before the predetermined time period elapses.

Next, the following description explains a nickname list with reference to Fig. 5. Fig. 5 is a view illustrating a display example of the nickname list. The nickname list is such a list that titles and nicknames corresponding to websites for which the user registers his nicknames, among the websites registered in the favorites list, are displayed.

In the example of Fig. 5, the display screen is divided into an upper screen and a lower screen. The upper screen displays titles of three websites (Blog (1), Blog (2), and Blog (3)), registered in the favorites list, and also user's nicknames used on respective titles of the three websites.

Further, as in the favorites screen illustrated in Fig. 2 or Fig. 3, the elapsed time period mark 22 is attached to each of the websites. Furthermore, if the cursor 23 is moved so that the cursor 23 and one of the websites overlap each other, a color in which the cursor 23 is displayed is changed into a color in which the elapsed time period mark 22 attached to the one of the websites is displayed.

That is, in the nickname list, too, the time periods that elapsed since the last time and date when the user visited the websites are also distinguished from each other in color in accordance with how long the time periods are, so that the user can see at once each approximate time period that elapsed since the last time and date when the user visited each of the websites.

Further, the lower screen displays (i) the last time and date (the last comment time and date) when the user posted a comment on the website whose title and the cursor 23 overlap each other on the upper screen, and (ii) a content of the comment. In Fig. 5, the cursor 23 and Blog (1) overlap each other on the upper screen, so that the last time and date when the user posted a comment on Blog (1), and the comment are displayed on the lower screen.

With this nickname list displayed, it is possible for the user to confirm which nickname is used on which blog, without accessing each blog via the Internet. Further, with the nickname list displayed, it is possible for the user to confirm what comment the user posted on each blog last time, by carrying out a simple operation of moving the cursor 23 to a target blog.

Further, with the mobile phone 1, by selecting a title displayed on the nickname list, it is possible for the user to access the website corresponding to the title thus selected. Accordingly, the user can access a target website from the nickname list after confirming, by referring to the nickname list, (i) which nickname is used on which website, (ii) when the last time and date when the user posted a comment on each of the websites was, and (iii) what comment the user posted on each of the websites.

Next, the following description explains a display example of a standby screen of the mobile phone 1 with reference to Fig. 6. Fig. 6 is a view illustrating an example of the standby screen. As illustrated in Fig. 6, the standby screen displays the elapsed time period mark 22 illustrated in Figs. 2, 3, and 5. This elapsed time period mark 22 indicates a time period that elapsed since the last time when the mobile phone 1 was connected to the website selected by the user in advance among the websites registered in the favorites list.

By displaying the elapsed time period mark 22 on the standby screen as described above, the user can become aware of the approximate time period that elapsed since the last time when the mobile phone 1 was connected to the website selected in advance, by only viewing the standby screen of the mobile phone 1. This can prevent the user from forgetting to access the website that particularly requires the user to periodically access the website.

It is preferable to display the elapsed time period mark 22 on the display screen 21 continuously so that the user can check the elapsed time period anytime. For this reason, the elapsed time period mark 22 is preferably displayed in a pict line. However, a position where the elapsed time period mark 22 is displayed is not particularly limited.

Fig. 6 illustrates an example where the elapsed time period mark 22 is displayed in the pict line. The pict line is a line for displaying a remaining battery level or an incoming signal strength, on the standby screen of the mobile phone 1. The pict line is displayed on the display screen 21 continuously in a position of an uppermost part of the display screen 21, so that the pict line is likely to be in user's sight. Therefore, the pict line is suitable for displaying the elapsed time period mark 22.

Further, for example, a foldable mobile phone often includes not only a main-display but a sub-display. The sub-display is positioned such that the sub-display can be seen even when the mobile phone is folded. In a case where the mobile phone includes such a sub-display, it is possible to cause, in place of the standby screen, the sub-display to display the elapsed time period mark 22. By causing the sub-display to display the elapsed time period mark 22, it is possible for the user to know the time period that elapsed since the last time the mobile phone was connected to the website thus selected in advance, while the mobile phone is in a folded state.

Next, the following description explains a display screen in a case where the mobile phone 1 receives an e-mail, with reference to Fig. 7. Fig. 7 is a view illustrating an example of a display screen of the mobile phone 1 in a case where an e-mail is received from a blog. It should be noted that, in this example, a blog sends an e-mail to the mobile phone 1 in a case where a content of the blog is updated, or a new comment is posted on the blog.

As illustrated in Fig. 7, when the mobile phone 1 receives an e-mail from the blog, the display screen 21 of the mobile phone 1 displays, in addition to a text and an image, which indicate the mobile phone 1 received the e-mail, the last time and date when the user visited the blog which is a sender of the e-mail, a time period that elapsed since the last time and date when the mobile phone 1 was connected to the blog, a nickname used on the blog, a comment the user posted on the blog, and a time and date when the user posted the comment on the blog.

This allows the user to (i) check the e-mail while checking previous information on the comment or the like with respect to the blog (sender), and (ii) while referring to the previous information on the comment or the like, post back a comment without delay to a new comment posted on the blog (sender).

Next, the following description explains display processing carried out in a case where the favorites screen illustrated in Fig. 2 or Fig. 3 is displayed, with reference to Fig. 8. Fig. 8 is a flow chart illustrating an example of the display processing of the favorites screen. In a case where the user operates the operation section 4 so as to input an instruction to display the favorites screen, the instruction to display the favorites screen is transmitted to the control section 6. When receiving the instruction to display the favorites screen, the control section 6 reads out data from the favorites management table 15 of the general-purpose memory 5 (S11).

Here, the following description explains the favorites management table 15 with reference to Fig. 9. Fig. 9 is a view illustrating an example of the favorites management table 15. As illustrated in Fig. 9, in the favorites management table 15, a title of a website (site specifying information), a URL (address), the last date and time when the mobile phone 1 was connected to the website, a blog flag (writable/write-inhibit information), a nickname (writer specifying information), and pict line display (constant display information) are stored so that these are associated with each other. The user can carry out, by operating the operation section 4, an addition, an amendment, and a cancellation with respect to each data stored in the favorites management table 15. The control section 6 uses the favorites management table so as to cause the favorites screen to be displayed.

Each title is information for specifying a website, and the control section 6 causes the display screen 21 to display each title. If the control section 6 confirms that one of the titles thus displayed is selected, the control section 6 transmits, to the communication control section 8 and the wireless network section 7, an instruction to access an URL corresponding to the title thus selected. This makes it possible to cause the mobile phone 1 to access the website.

Further, in a case where the mobile phone 1 accesses the website registered in the favorites list, the control section 6 overwrites a column of the last time and date when the mobile phone 1 was connected to the website, with a current time and date, and stores the current time and date in the column. With this procedure, in the column of the last time and date when the mobile phone 1 was connected to the website, the time and date when the user accessed the website last time, i.e. the last time and date when the mobile phone 1 was connected to the website, is stored.

Each blog flag indicates whether or not each of the websites stored in the favorites management table 15 is a comment writable website on which a user can post a comment, such as a blog or an electronic bulletin board. In the example of Fig. 9, a website corresponding to "1" in a blog flag column is a writable website, and a website corresponding to "0" in the blog flag column is not a writable website. The user can arbitrarily set "0" or "1" of the blog flag by carrying out an input operation via the operation section 4.

It should be noted that, it is possible to arrange the control section 6 to set the blog flag of a website to be "1" when the user carries out the writing on the website via the mobile phone 1. In this case, the user does not have to carry out processing to set the blog flag.

Further, in each nickname column, the nickname used by the user on each of the websites is stored. This nickname is read out in a case where for example, any one of the display screens illustrated in Figs. 2 through 5, and Fig. 7, is displayed. The user also can arbitrarily set or change each of the nicknames, in the same manner as each of the blog flags.

A pict line display column indicates whether or not the pict line display illustrated in Fig. 6 is carried out. In the example of Fig. 9, the elapsed time period mark 22 of a website corresponding "0" of the pict line display is not displayed in the pict line, and the elapsed time period mark 22 of a website corresponding to "1" of the pict line display is displayed in the pict line. The user can arbitrarily set "0" or "1" of the pict line display by carrying out an input operation via the control section 4.

In this example, the mobile phone 1 displays only one elapsed time period mark 22 for one website in the pict line. However, it is possible to display, in the pict line, a plurality of elapsed time period marks 22 for a plurality of websites. In this case, in order that the user can recognize which elapsed time period mark 22 indicates which website, the elapsed time period marks 22 are displayed in such a manner that, for example, the elapsed time period marks 22 are displayed on the display screen 21 in positions different from each other.

The control section 6 obtains, at predetermined timing, the time period that elapsed since the last time and date when the mobile phone 1 was connected to the website corresponding to "1" of the pict line display in the favorites management table 15, and updates the elapsed time period mark 22 of the website. The predetermined timing for updating an elapsed time period mark 22 are not particularly limited, and may be set to be, for example, constant timing such as every 6 hours, or every 12 hours.

It should be noted that the data read out by the control section 6 in the Step S 11 is data stored in an uppermost line of the favorites management table 15. In the example of Fig. 9, data of the title "Search Site (1)", the URL, etc., is read out. In other words, here, display processing of the favorites screen is carried out sequentially with respect to data in the order from data stored in the favorites management table 15 earlier to data stored in the favorites management table later. It should be noted that the order that the display processing is carried out is not particularly limited, as long as the display processing is carried out with respect to all the websites registered in the favorites list ultimately.

Here, the following description further explains the flow chart described above. After reading out the data from the favorites management table 15 in S11, the control section 6 determines a difference between the last time and date when the mobile phone 1 was connected to the website, which last time and date is stored in the last time and date column in the data thus read out, and a current time and date, so as to calculate the time period that elapsed since the last time and date when the mobile phone 1 was connected to the website (elapsed time period) (S 12). It should be noted that, not illustrated in the block diagram of Fig. 1 though, the mobile phone 1 includes a timer. The control section 6 obtains the current time and date from the timer.

Then, the control section 6 causes the display screen 21 to display the title of the website for which the elapsed time period have been calculated as described above, and the elapsed time period mark 22 corresponding to the elapsed time period thus calculated, together (S13). Next, the control section 6 causes the cursor 23 to be displayed so that the cursor 23 and the title thus displayed overlap each other, the cursor 23 being displayed in a color in accordance with the elapsed time period calculated described above (S14). The control section 6 also causes the display screen 21 to display the last time and date when the mobile phone 1 was connected to the website, and the elapsed time period (S15).

Here, the control section 6 checks whether or not the blog flag column of the favorites management table 15 shows "1" (S16). In a case where the blog flag shows "0" (NO in S16), the control section 6 proceeds to carry out processing of S 19. The processing of S 19 will be described later.

On the other hand, in a case where the blog flag shows "1" (YES in S16), the control section 6 reads out data from the comment management table 16 of the general-purpose memory 5 (S17). It should be noted that the data described in S 17 is data stored in the comment management table 16, that is, a comment and a time and date when the user posted the comment.

Here, the following description explains the comment management table 16 with reference to Fig. 10. Fig. 10 is a view illustrating an example of the comment management table 16. The comment management table 16 is created for each of the websites registered in the favorites list. For example, in a case where Blog (1), Blog (2), and Blog (3) are registered in the favorites list, the comment management table 16 is created for each of Blog (1), Blog (2), and Blog (3), as illustrated in Fig. 10.

In the comment management table 16, a user's comment posted on each of the websites, and a time and date when the user posted the comment on the website, are stored so that the comment and the time and date when the user posted the comment on the website are associated with each other. It should be noted that the comment and the time and date when the user posted the comment on the website are stored in the comment management table 16 by the control section 6 when the user posts the comment on the website.

Then, the control section 6 reads out, from the comment management table 16 in S17 of the flow chart of Fig. 8, the last comment and the time and date when the user posted the last comment on the website, and causes the display screen 21 to display (i) the last comment and the time and date when the user posted the last comment on the website, which are read out from the comment management table, and (ii) the nickname read out from the favorites management table 15 in S11 (S18).

It should be noted that the nickname, the time and date when the user posted the last comment, and the last comment, which are displayed in S18, may be displayed, for example, in such a manner that, as illustrated in Fig. 2, the display screen 21 is divided into an upper screen and a lower screen, and the lower screen displays these, or in such a manner that, as illustrated in Fig. 3, the display screen 21 is divided into three screens, that is, an upper screen, a middle screen, and a lower screen, and the lower screen displays these. However, the nickname, the time and date when the user posted the last comment on the website, and the last comment, which are displayed in S18, are not limited to these examples, and may be displayed in any way as long as these are displayed on the display screen in such a manner that these are visibly perceivable to the user.

Next, the control section 6 checks whether or not there is next data (S19). It should be noted that the next data is data (a title of a website, the last time and date when the mobile phone 1 was connected to a website, etc.) of a website stored in the uppermost line, among the websites stored in the favorites management table 15 but not yet displayed on the display screen 21. In a case where there is no such next data (NO in S19), the control section 6 finishes the display processing of the favorites screen.

On the other hand, in a case where there is such next data (YES in S19), the control section 6 reads out the next data from the favorites management table 15 (S20), and then calculates an elapsed time period from a difference between the last time and date when the mobile phone 1 was connected to the website, included in the data thus read out, and the current time and date (S21), after that, causes the display screen 21 to display the title of the website and the elapsed time period mark 22 (S22). After causing the display screen 21 to display the title and the elapsed time period mark 22, the control section 6 returns to the processing of S16 so as to check the blog flag of the website.

Next, the following description explains display processing carried out in a case where the nickname list illustrated in Fig. 5 is displayed, with reference to Fig. 11. Fig. 11 is a flow chart illustrating an example of the display processing of the nickname list. In a case where the user operates the operation section 4 so as to input an instruction to display the nickname list, the instruction to display the nickname list is transmitted to the control section 6. When receiving the instruction to display the nickname list, the control section 6 reads out data from the favorites management table 15 and the comment management table 16 of the general-purpose memory 5 (S31).

It should be noted that the data read out in S31 is data of the website stored in the uppermost line of the favorites management table 15 among the websites whose blog flags shows "1" in the favorites management table 15, that is, the title of the website, the last time and date when the mobile phone 1 was connected to the website, and the nickname (which are stored in the favorites management table), and the comment, and the time and date when the user posted the comment on the website (which are stored in the comment management table 16 of the website).

For example, in Fig. 9, Blog (1) is stored in the uppermost line of the favorites management table 15 among the websites whose blog flags shows "1", so that the last time and date when the mobile phone 1 was connected to Blog (1) and the like are read out in S31. That is, in this example, the display processing of the nickname list is carried out with respect to data in the order from data stored in the favorites management table 15 earlier to data stored in the favorites management table 15 later. It should be noted that the order that the display processing of the nickname list is carried out is not particularly limited, as long as the display processing is carried out with respect to data of all of the blogs registered in the favorites list ultimately.

Next, the control section 6 calculates an elapsed time period from a difference between the last time and date (read out in S31) when the mobile phone 1 was connected to the website, and the time and date when the mobile phone 1 was connected to the website this time (S32), and then causes the display screen 21 to display (i) the nickname and the title (read out in S31), and (ii) the elapsed time period mark 22 whose color corresponds to the elapsed time period thus calculated, together (S33). After that, the control section 6 causes the cursor 23 whose color is the same as that of the elapsed time period mark 22, and the nickname and the title, displayed as described above, to be displayed in such a manner that the cursor 23, and the nickname and the title overlap each other (S34).

Then, the control section 6 causes the display screen 21 to display the time and date when the user posted the last comment, and the last comment (S35). It should be noted that it is preferable to display the time and date when the user posted the last comment on the website, and the last comment, with respect to only a website whose title and the cursor 23 overlap each other. This allows the user to easily check the time and date when the user posted the last comment on the website, and the last comment, even on a small display screen 21 of the mobile phone 1.

Further, a position where the time and date when the user posted the last comment on the website, and the last comment are displayed is not particularly limited as long as the position is visibly perceivable to the user. However, it is preferable to display these, for example, on the lower screen of the display screen 21, as illustrated in Fig. 5. By displaying these on the lower screen of the display screen 21, it becomes possible for the user to check the time and date when the user posted the last comment on the website, and the last comment, on the lower screen while checking the nickname and the title of the website on the upper screen.

Next, the control section 6 checks whether or not there is next data (S36). It should be noted that the next data is data of the website which is stored in the uppermost line of the favorites management table 15 among the websites stored in the favorites management table 15 but not yet displayed on the display screen 21, that is, the title of the website, the last time and date when the mobile phone 1 was connected to the website, etc. In a case where there is no such next data (NO in S36), the control section 6 finishes the display processing of the nickname list.

On the other hand, in a case where there is such next data (YES in S36), the control section 6 reads out the next data from the favorites management table 15 and the comment management table 16 (S37), and then calculates an elapsed time period based on the data thus read out (S38), after that, causes the display screen 21 to display the nickname and the elapsed time period mark 22 (S39). After causing the display screen 21 to display the nickname and the elapsed time period mark 22, the control section 6 returns to the processing of S36 so as to check whether or not there is next data.

As described above, the display processing of the nickname list is carried out sequentially until, among the websites stored in the favorites table 15, all of the websites for which nicknames are registered are displayed on the display screen 21.

It should be noted that if the user moves the cursor 23 by operating the operation section 4 while the nickname list is displayed, the control section 6 reads out the comment management table 16 of a website to which the cursor 23 is pointed, and causes the display screen 21 to display the last comment and a content of the last comment.

Next, the following description explains display processing carried out in a case where a blog screen illustrated in Fig. 4 is displayed, with reference to Fig. 12. Fig. 12 is a flow chart illustrating an example of the display processing of the blog screen. In a case where the user operates the operation section 4 so as to input an instruction to access a blog, the instruction to access the blog is transmitted to the control section 6. When receiving the instruction to access the blog, the control section 6 establishes a connection with the blog via the Internet, and causes the display screen 21 to display a blog screen obtained via the Internet (S41).

The blog screen may be displayed in any way as long as the blog screen is visibly perceivable to the user. Here, as illustrated in Fig. 4, the following description explains an example where the display screen 21 is divided into an upper screen and a lower screen, and the upper screen displays the blog screen.

Next, the control section 6 reads out data corresponding to the blog connected to the mobile phone 1 as described above, from the favorites management table 15 and the comment management table 16 (S42). It should be noted that, here, the control section 6 reads out, from the favorites management table 15, the last time and date when the mobile phone 1 was connected to the blog and a nickname used on the blog, and reads out, from the comment management table 16, a comment posted on the blog by the user and the time and date when the user posted the comment.

Next, the control section 6 calculates, based on the data thus read out, a time period that elapsed since the last time and date when the mobile phone 1 was connected to the blog to the time when the mobile phone 1 was connected to the blog this time (S43), and causes the display screen 21 to display: the last time and date when the user visited the blog (the last time and date when the mobile phone 1 was connected to the blog); the time period that elapsed since the last time and date when the mobile phone 1 was connected to the blog; the nickname; the time and date when the user posted the comment on the blog, and the comment (S44).

It should be noted that the last time and date when the user visited the blog (the last time and date when the mobile phone 1 was connected to the blog), the time period that elapsed since the last time and date when the mobile phone 1 was connected to the blog, etc., may be displayed in any way, as long as these are displayed such that these are visibly perceivable to the user. However, it is preferable to display these, for example, on the lower screen of the display screen 21, as illustrated in Fig. 4. This allows the user to check a history of his access to the blog on the lower screen while checking the content of the blog on the upper screen.

Then, the control section 6 updates the last time and date (stored in the favorites management table 15) when the mobile phone 1 was connected to the blog which is being in connection with the mobile phone 1 as described above, with the current time and date (S45). After updating the last time and date when the mobile phone 1 was connected to the blog, the control section 6 stands by for an input operation from the user (S46). In a case where the input operation is carried out (YES in S46), the control section 6 checks whether or not the input operation is an instruction to change history display (S47).

Here, the following description explains the operation of changing history display. The operation of changing history display is an operation to change a manner for displaying, on the display screen 21, a history of user's access to a website, or a history of the writing carried out by the user (such as the last time and date when the user visited the website, the time period that elapsed since the last time and date when the mobile phone 1 was connected to the website, and a comment posted by the user on the website). Specifically, the operation of changing history display includes: an operation of erasing history display, carried out in order to cause the display screen 21 not to display such a history; and an operation of displaying a history, carried out in order to cause the display screen 21 to display such a history in a case where the history is updated into the newest history, or in a case where the history is not displayed on the display screen 21. It should be noted that the operation of changing the history display is carried out by operating the operation section 4.

In a case where the input operation detected in S47 is the operation of displaying a history, the control section 6 returns to the processing of S42 so as to read out the data from the favorites management table 15 and the comment management table 16 again. Then, the control section 6 updates the last time and date when the user visited the website, the last time and date when the mobile phone 1 was connected to the website, etc., and causes these to be displayed. On the other hand, in a case where the input operation detected in S47 is the operation of erasing history display, the control section 6 causes the display screen 21 to display the blog screen at a full screen size (S48), and then returns to the processing S46 so as to stand by for an input operation from the user.

Further, meanwhile, in a case where the input operation detected in S47 is not the operation of changing history display (NO in S47), the control section 6 checks whether or not the input operation is an operation of transmitting a comment (S49). It should be noted that the operation of transmitting a comment is an operation of transmitting a comment, via e-mail, to the blog which is being accessed by the user as described above. In a case where the input operation is not the operation of transmitting a comment (NO in S49), the control section 6 carries out processing instructed by the input operation (S50), and then returns to S46 so as to stand by for an input operation.

On the other hand, in a case where the input operation is the operation of transmitting a comment (YES in S49), the control section 6 adds the comment transmitted to the blog to the comment management table 16, and also stores the current time and date, that is, a time and date when the user transmitted the comment, in the comment management table 16 (S51). After storing the comment and the time and date when the user transmitted the comment in the comment management table 16, the control section 6 returns to S46 so as to stand by for an input operation.

Next, the following description explains processing carried out in a case where the mobile phone 1 receives an e-mail from a blog, with reference to Figs. 13 and 14. Fig. 13 is a flow chart illustrating an example of processing carried out in a case where the mobile phone 1 received an e-mail. That is, in a case where the wireless network section 7 confirms the mobile phone 1 receives an e-mail, the wireless network section 7 informs the control section 6 that the mobile phone 1 received the e-mail. When receiving, from the wireless network section 7, a notice that the mobile phone 1 received the e-mail, the control section 6 checks whether or not the e-mail is received from a blog registered in the favorites list (S62).

Here, in order to recognize the e-mail received from the blog registered in the favorites list, e-mail addresses of blogs registered in the favorites list are used. That is, in a case where a blog transmits an e-mail, the e-mail includes, in its header or the like, an e-mail address of the blog (sender of an e-mail). Therefore, the control section 6 checks whether or not an e-mail address of each of the blogs registered in the favorites list, which e-mail address is stored in advance, is identical with the e-mail address included in the header or the like of the e-mail, so as to confirm whether or not the e-mail thus received is transmitted from a blog registered in the favorites list.

It should be noted that it is not particularly limited where the e-mail address is stored, as long as the e-mail address is stored so that the e-mail address and a title of the website are associated with each other. Here, the following description explains an example where the e-mail address is stored in the favorites management table 15.

Fig. 14 illustrates an example of the favorites management table 15 including an e-mail address of each of the blogs. As illustrated in Fig. 14, in addition to data of each item included in the favorites management table 15 illustrated in Fig. 9, an e-mail address of each of Blog (1), Blog (2), and Blog (3) is stored.

In this manner, the control section 6 checks whether or not the e-mail thus received is transmitted from a blog registered in the favorites list. Then, in a case where the e-mail received in S61 is not transmitted from a blog registered in the favorites list (NO in S62), the control section 6 causes the display screen 21 to display a text and/or an image indicating an incoming of the e-mail (S63), and finishes the processing for the incoming e-mail.

On the other hand, in a case where the e-mail received in S61 is transmitted from a blog registered in the favorites list (YES in S62), the control section 6 reads out data of a corresponding blog from the favorites management table 15 and the comment management table 16 (S64). Note that, here, the control section 6 reads out, from the favorites management table 15, a title of the blog, the last time and date when the mobile phone 1 was connected to the blog, and a nickname used on the blog, and reads out, from the comment management table 16, a comment the user posted on the blog, and the time and date when the user posted the comment on the blog.

Next, the control section 6 calculates a time period that elapsed since the last time and date when the mobile phone 1 was connected to the blog (S65), and causes the display screen 21 to display the title of the blog, the last time and date when the user visited the blog (the last time and date when the mobile phone 1 was connected to the blog), the time period that elapsed since the last time and date when the user visited the blog, the nickname, the time and date when the user posted the comment, and the comment. After causing the display screen 21 to display these, the control section 6 finishes the processing for the incoming e-mail.

It should be noted that the data displayed in S65 only has to include at least the title of the blog and the last time and date when the user visited the blog, and the other data can be omitted as appropriate. However, it is preferable to display the nickname, the time and date when the user posted the comment, the comment, etc., because by displaying these, it becomes possible for the user to confirm the e-mail while checking previous information on the blog (sender of the e-mail).

Further, in the example described above, the time period that elapsed since the last time and date when the mobile phone 1 was connected to a website, the last time and date when the mobile phone 1 was connected to a website, etc., are displayed. However, there may be a user who considers it is not necessary to check an accurate time period that elapsed since the last time when the user accessed a certain website, but only an approximate time period. In this case, in place of the last time and date when the mobile phone 1 was connected to the website, the last date when the user accessed the website, that is, the last date when the mobile phone 1 was connected to the website, may be stored in advance, and displayed.

In the same manner, in the example described above, the time and date when the user posted a comment on a website is stored in the general-purpose memory 5, and the time and date when the user posted the comment on the website, and the time period that elapsed since the last time and date when the user posted a comment on the website are displayed. However, it is possible to store a date when the user posted a comment on a website, and display merely the last date when the user posted a comment, and a time period that elapsed since the last date when the user posted the comment on the website.

### [Modified Example]

Next, the following description explains a modified example of the present invention, with reference to Figs. 15 through 21. It should be noted that an arrangement having the same function as the arrangement described in the above embodiment has the same sign, and explanations of such arrangements are omitted for the sake of simple explanation.

The above embodiment explains an example where the cursor is moved so that the cursor and a title of the website overlap each other on the favorites screen, and thereby a time period that elapsed since the last time and date when the mobile phone 1 was connected to the website corresponding to the title to which the cursor is pointed, etc., are displayed.

Here, the following description explains an example where, in a case where a title of a website on the display screen and the cursor overlap each other, a history of access to the website corresponding to the title to which the cursor is pointed is displayed in a form of a calendar. By displaying such a history in the form of a calendar, it becomes possible for the user to (i) confirm how many days elapsed since the last time when the user accessed the website, and also (ii) easily become aware of how often the user accessed the website in the past.

Fig. 15 is a view illustrating an example of an image displayed on the display screen 21, in a case where the cursor is moved so that the cursor and a title of a website, displayed on the favorites screen, overlap each other, and thereby a history of access to the website corresponding to the title to which the cursor is pointed is displayed in the form of a calendar.

As illustrated in Fig. 15, the display screen 21 displays the favorites screen in the same manner of Fig. 2 or the like, and "Search Top Page", "Sport News", "Blog (1)", "Blog (2)", and "Blog (3)", which are titles of the websites registered in the favorites screen, are displayed. Each of the titles is attached with an icon (site specifying information) 32, and a cursor (selecting means) 23 is displayed so that the cursor 23 and one of the titles overlap each other.

Further, as illustrated in Fig. 15, the display screen 21 displays a calendar 31 which indicates a history of access to a website corresponding to a title (Blog (2) in Fig. 15) to which the cursor 23 is pointed. The calendar 31 is a one-month calendar including a current date. In the calendar 31, a year and month (December 2006, in Fig. 15) of the calendar 31 is displayed.

As illustrated in Fig. 15, there are dates to which star marks are attached independently in the calendar 31. That is, the calendar 31 shows the user accessed Blog (2) on the dates to which the star marks are attached independently.

Accordingly, by (i) pointing the cursor 23 to a title of a website for which the user hopes to confirm an access history, and thereby (ii) causing the calendar 31 to be displayed, the user can easily confirm the history of access to the website within a time period of one month. Further, the access history is displayed on the calendar 31, so that the user easily become aware of how often and how many times the user accessed the website in the past.

It should be noted that the calendar 31 is not limited to the example where the date when the user accessed Blog (2) is attached with the star mark, and may be displayed in any way as long as the calendar 31 is displayed such that the date when the user accessed Blog (2) is perceivable to the user. For example, a date when the user accessed a website may be attached with an icon 32 of the website, or alternatively a title of the website may be displayed with the date.

In order to realize such a screen, the mobile phone 1 stores a calendar for every month in the general-purpose memory 5. Further, the mobile phone 1 stores, in the general-purpose memory 5, a date when the mobile phone 1 accessed each of the websites registered in the favorites list, when the mobile phone 1 accesses such a website.

Here, in a case where the cursor is moved on the favorites display screen so that the cursor and a title of a website overlap each other, the control section 6 (i) determines which website corresponds to the title to which the cursor is pointed, (ii) reads out each date when the user accessed the website from the general-purpose memory 5, and simultaneously (iii) reads out a calendar corresponding to the current date.

Then, the control section 6 (i) checks each date when the user accessed the website against dates of the calendar thus read out, and (ii) causes the display screen 21 to display the calendar such that the star mark is attached to each date corresponding to each date when the user accessed the website. In this manner, the display screen 21 displays such a calendar 31 that each date when the user accessed the website is attached with the star mark on a one-month calendar including the current date.

Next, the following description explains an icon 32 illustrated in Fig. 15. In the aforementioned embodiment, the elapsed time period mark 22 (see Fig. 2) indicates, by its color, a time period that elapsed since the last time and date when the mobile phone 1 was connected to a website to which the elapsed time period mark 22 is attached.

On the other hand, the icon 32 of the present modified example corresponds to a website registered in the favorites, one by one, and the user can use the icon 32 to specify the website corresponding to the icon 32. That is, the icon 32 functions as the site specifying information. It should be noted that, in this example, when a website is registered in the favorites list, a specific icon 32 is simultaneously set for the website, as appropriate.

The display screen 21 of the mobile phone 1 is smaller than that of a personal computer or the like. Therefore, in some cases, it may be difficult for a user to confirm a content displayed on the display screen 21. In this case, by displaying the icon 32 in place of the title of the website, it becomes possible for the user to easily confirm the content displayed on the display screen 21.

Next, the following description explains an example where another calendar is displayed. In the present modified example, a function of displaying a calendar (which function is practically equipped in a mobile phone) is used, so as to manage history information (such as a history of access to a website registered in the favorites list). Thereby, it becomes possible to realize a simpler arrangement for the user to use. The following description explains an example of calendar display of the present modified example, with reference to Fig. 16.

As illustrated in Fig. 16, a calendar 33 is a one-month calendar on which days and dates are displayed. In the example illustrated in Fig. 16, the calendar 33 is a calendar of December 20XX. That is, in this example, the current month is December 20XX.

Further, a blank space is provided below each date, and information related to each date can be displayed in the blank space. For example, in the example illustrated in Fig. 16, "Athletic Festival" is displayed in the blank space below the date 10. This means an athletic festival is held on December 10, 20XX. It should be noted that the user can arbitrarily set such a content displayed in the display screen by carrying out an input operation.

As illustrated in Fig. 16, the icon 32 is displayed in the blank space provided for a date. In the calendar 33, in a blank space of a date on which a website registered in the favorites list was updated, the icon 32 is displayed so as to indicate the website was updated. It should be noted that, here, it is determined that a website is updated when (i) the website is registered in the favorites list, (ii) the website registered in the favorites list is updated by an administrator of the website, and (iii) the user posts a comment on the website, and the icon 32 corresponding to the website is displayed in the blank space of such a date.

For example, on December 4, the icon 32 of Blog (2) is displayed. This means at least one of the following (a), (b), and (c) was carried out on December 4: (a) Blog (2) was registered in the favorites list; (b) Blog (2) was updated; and (c) a comment was posted on Blog (2).

As described above, a list of one-month update histories of the websites registered in the favorites list is displayed on the calendar 33 so that the user can confirm at once when the user accessed which website, or when the websites were updated. For example, in Fig. 16, it can be seen that in December 20XX, Blog (2) has been updated four times, that is, on December 4, December 15, December 18, and December 22.

By selecting the icon 32 displayed on the calendar 33, the user can cause the display screen 21 to display a content of the update of the website specified by the icon 32. Here, the following description explains an example where a history display screen 36 illustrated in Fig. 17 is displayed in a case where the user selects the icon 32 displayed on the calendar 33. Fig. 17 is a view illustrating an example where a content of the update is displayed.

As illustrated in Fig. 17, the history display screen 34 displays a title of the website for which a content of the update is displayed, and the content of the update of the website. This allows the user to confirm the content of the update indicated by the icon 32 illustrated in Fig. 16. Here, as illustrated in Fig. 16, Blog (2) was updated four times, that is, on December 4, December 15, December 18, and December 22. Therefore, specific contents of the four updates are displayed.

That is, in the example illustrated in Fig 17, the followings are displayed: (i) Blog (2) was registered in the favorites list on December 4; (ii) Blog (2) was updated by an administrator of Blog (2) on December 15; (iii) a comment was added to Blog (2) by Pyrroli (nickname used by the user on Blog (2)) on December 18; and (iv) Blog (2) was updated again by the administrator of Blog (2) on December 22.

It should be noted that Fig. 17 illustrates an example where all of the updates of the website whose icon 32 was selected are displayed. However, it is possible to cause the update carried out on only the date corresponding to the icon 32 selected by the user, to be displayed.

Here, Fig. 17 illustrates an example where all kinds of the updates of the website specified by the icon 32 selected on the calendar 33, which updates were carried out in a certain month, are displayed. However, it is possible to cause only a certain kind of the update to be displayed. The following explains this arrangement with reference to Fig. 18. Fig. 18 is a view illustrating an example of a display screen which displays only updates of a website, which updates were carried out by an administrator of the website.

As illustrated in Fig. 18, a history display screen 35 displays a title of the target website for which contents of the updates are displayed, and simultaneously, dates on which the administrator of the website updated the website. For example, in Fig. 18, it can be seen that Blog (2) was updated on December 4, December 5, December 20, December 24, and January 15. In this manner, by causing the display screen 21 to display only certain information among the contents of the updates, it becomes possible for the user to easily confirm only target information that the user hopes to confirm.

It should be noted that in the example illustrated in Fig. 18, all of the dates on which Blog (2) was updated are displayed. However, it is possible to display only the updates carried out in a certain month specified by the user, or only a couple of the latest updates. Further, it is possible to display the content of the update, such as the time and date when the user added a comment, or the like.

Further, in this example, in a case where the icon 32 on the calendar 33 is selected, the history display screen 34 illustrated in Fig. 17 or the history display screen 35 illustrated in Fig, 18 is displayed. However, a method of displaying the content of the update is not limited to this example. For example, on the calendar 33, it is possible to carry out pop-up display with respect to a content of an update, indicated by an icon 32 selected as a candidate website by pointing the cursor to the icon 32.

For example, on the calendar 33 illustrated in Fig. 16, the icon 32 of Blog (2) is displayed in the blank space of December 4. As illustrated in Fig. 17, Blog (2) was registered in the favorites list on December 4. Here, in a case where Blog (2) is selected as the candidate website by, for example, pointing the cursor to the icon 32 (displayed on December 4) of Blog (2), a text, such as "Favorites Registration", is displayed in a pop-up manner, for example. This allows the user to easily confirm what content of the update each icon 32 displayed on the calendar 33 indicates specifically.

In order to realize the display screen illustrated in Fig. 16, the mobile phone 1 stores a calendar for every month in the general-memory 5. Further, the control section 6 of the mobile phone 1 stores, in the general-purpose memory 5, for each website, (i) a date when the user registered a website in the favorites list, (ii) a date when the website registered in the favorites list was updated, and (iii) a date when the user posted a comment on the website registered in the favorites list. That is, here, the control section 6 functions as history obtaining means.

It should be noted that, in this example, in a case where the website registered in the favorites list is updated, the website thus updated transmits, to the mobile phone 1, an e-mail indicating the update of the website. The e-mail is transmitted to the control section 6 via the wireless network section 7, and the control section 6 checks a sender of the e-mail, and then determines the website (sender of the e-mail) was updated.

Here, in a case where the user operates the operation section 4 so as to input an instruction to display the calendar 33, the control section 6 reads out, from the general-purpose memory 5, (i) the date when the user registered the website in the favorites list, (ii) the date when the website registered in the favorites list was updated, and (iii) the date when the user posted a comment on the website registered in the favorites list. Then, the control section 6 reads out, from the general-purpose memory 5, the icon 32 of each of the websites, and simultaneously the calendar corresponding to the current date.

After that, the control section 6 checks dates included in the calendar thus read out, against (i) the date when the user registered each of the websites in the favorites list, (ii) the date when each of the websites registered in the favorites list was updated, and (iii) the date when the user posted a comment on each of the websites registered in the favorites list, and then causes the display screen 21 to display each date which corresponds to any of the aforementioned dates (i) through (iii) in such a manner that each date is attached with the icon 32 thus read out. In this manner, the calendar 33 on which the icon 32 is displayed is displayed on the display screen 21.

Further, in a case where any one of the icons 32 displayed on the calendar 33 is selected, the control section 6 determines the website specified by the icon 32 thus selected, by referring to the general-purpose memory 5, and reads out, from the general-purpose memory 5, (i) the date when the user registered the website thus determined in the favorites list, (ii) the date when the website registered in the favorites list was updated, and (iii) the date when the user posted a comment on the website registered in the favorites list.

Then, the control section 6 causes the display screen 21 to display the title of the website determined as described above, and simultaneously causes the display screen 21 to display (i) a text indicating the website was registered in the favorites list, (ii) the date when the user registered the website in the favorites list, (iii) a text indicating the website was updated, (iv) the date when the website was updated, (v) a text indicating the user posted a comment on the website, and (vi) the date when the user posted a comment on the website. It should be noted that here, the control section 6 causes the display screen 21 to display only an update history of dates in a certain month indicated by the calendar 33. Therefore, the display screen 21 displays the history display screen 34.

Here, in the example illustrated in Fig. 17, the text indicating the user posted a comment on the website includes a nickname "Pyrroli". The control section reads out this nickname stored in the favorites management table 15, and causes the history display screen 34 to display the nickname. It is preferable to display the nickname in the text indicating the user posted a comment on the website, because with the nickname included in the text, it becomes possible for the user to check his nickname used to post the comment on the website.

Further, the history display screen 34 is not particularly limited, as long as the history display screen allows the user to confirm the date when the user registered the website in the favorites list, the date when the user posted a comment on the website, or the like. For example, the history display screen 34 may display these in a text format, or an image format. Fig. 17 illustrates an example where only the history of a certain month indicated by the calendar 33 is displayed. However, the present invention is not limited to this, and it is possible to display not only the history of the certain month indicated by the calendar 33 but also all of the histories stored in the general-purpose memory 5. Further, the content of the update is not limited to the example described above, and a content of the comment posted by the user, for example, may be displayed as the content of the update.

Next, the following description explains an operation of the mobile phone 1 in a case where only an update history is displayed, as illustrated in Fig. 18. That is, when an instruction to display a history of updates carried out by an administrator of a certain website, the control section 6 reads out, from the general-purpose memory 5, each date on which the website was updated by the administrator, and causes the display screen 21 to display such a date with a title of the website. This causes the display screen 21 to display the history display screen 35.

It should be noted that the history display screen 35 may be displayed when the icon 32 displayed on the calendar 33 illustrated in Fig. 16 is selected, for example, or may be displayed from a menu screen (not illustrated). Further, the history display screen 35 displays only the history of the updates carried out by the administrator. However, for example, the history display screen 35 may display only the history of comments posted by the user on the website.

Further, the content of the update indicated by the icon 32 displayed on the calendar 33 may be displayed with the calendar 33. This allows the user to easily confirm which content the icon 32 displayed on the calendar 33 indicates, that is, (i) the user registered the website in the favorites list, (ii) the website was updated, or (iii) the user posted a comment on the website.

The following description explains an example of a display screen where the content of the update, indicated by the icon 32 displayed with the calendar 33, is displayed on the calendar 33, with reference to Fig. 19. As illustrated in Fig. 19, the display screen 21 displays the calendar 33, and in the blank space of December 4, the icon 32 of Blog (2) is displayed. That is, in this example, Blog (2) was updated on December 4.

Further, the display screen 21 also displays a calendar detailed information 36 and a reminder information 37. As the calendar detailed information 36, a text of "December 4, Blog (2) was registered in favorites list" is displayed, as illustrated in Fig. 19. This allows the user to easily recognize the icon 32 displayed in the blank space of December 4 of the calendar 33 indicates the date when the user registered Blog (2) in the favorites list.

Further, the calendar detailed information 36 is hyperlinked with a website described in the calendar detailed information 36. This allows the user to access the website described in the calendar details information 36 by selecting the calendar detailed information 36 by using the selection means, such as a cursor or the like (not illustrated). As a result, the user can access the website described in the calendar detailed information 36 smoothly after confirming the content of the description of the calendar detailed information 36.

It is possible to display, as the calendar detailed information 36, the content of the update of only the website specified by the icon 32 to which the cursor is pointed, as illustrated in Fig. 19, or alternatively the content of the update of each of the websites specified by all of the icons 32 displayed on the calendar 33.

The reminder information 37 shown in Fig. 19 is information for informing the user that a predetermined time period has elapsed since the last time when the user accessed the website registered in the favorites list. By displaying the reminder information 37, it becomes possible to prevent the user from forgetting to update the website registered in the favorites list, or post a comment on the website registered in the favorites list. Details of the reminder information 37 will be described later.

Further, the calendar 33 may be displayed on the standby screen continuously, as a background of the display screen 21. Fig. 20 is a view illustrating an example of the standby screen. As illustrated in Fig. 20, the display screen 21 displays the calendar 33, and simultaneously displays the calendar detailed information 36 and the reminder information 37.

By causing the standby screen to display the calendar 33, it becomes possible for the user to easily check the date when the user registered the website in the favorites list, the date when the website was updated, the date when the user posted (added) a comment on the website, and the like, by only viewing the display screen 21 of the mobile phone 1.

The calendar detailed information 36 displayed on the standby screen includes history information of all of the icons 32 displayed on the calendar 33. However, the display screen 21 of the mobile phone 1 is limited in its size, so that, in a case where the history information of all of the icons 32 is displayed, the history information may become less perceivable to the user. Therefore, it is preferable to display a couple of the latest history information among all of the history information, for example.

It should be noted that it is preferable to continue to display the reminder information 37 until the user accesses the website indicated by the reminder information 37. Further, in order to allow the user to access the website indicated by the reminder information 37 right after the user confirms the reminder information 37, it is preferable to cause the reminder information 37 to be hyperlinked with the website described in the reminder information 37.

Next, the following description explains a method of setting a reminder. By setting the reminder, the reminder information 37 is displayed on the display screen. Thereby, it is possible to successfully prevent the user from forgetting to update a website or post a comment on a website.

In the mobile phone 1, it is possible to set a reminder for each of the websites registered in the favorites list. In this example, the user can determine, for each of the websites registered in the favorites list, whether or not the reminder is set. In a case where the user sets the reminder, the user can set a reminder period.

The reminder period is such a time period that if the user does not access the website within the reminder period, the reminder information 37 is displayed. The user can arbitrarily set the reminder period. The reminder period may be one day, two days, five days, one week, two weeks, or one month, for example. That is, in the mobile phone 1, in a case where a time period in which the user has not accessed a website exceeds the predetermined reminder period, the reminder information 37 is displayed.

For example, if the user sets the reminder period for Blog (2) registered in the favorites list to be two weeks, and the time period in which the user has not accessed Blog (2) exceeds two weeks, the reminder information 37 is displayed so as to inform the user that the time period in which the user has not accessed Blog (2) exceeds two weeks.

By causing the reminder information 37 to be displayed when the calendar 33 is displayed (see Fig. 19), or when the standby display is displayed (see Fig. 20), it becomes possible for the user to easily become aware of a website that the user has not accessed in a predetermined time period. Thereby, it becomes possible to successfully prevent the user from forgetting to update a website or post a comment on a website.

Further, it is possible to have an arrangement in which, in a case where the reminder period set by the user elapses, a message is automatically displayed so as to inform the user that the reminder period has elapsed. For example, if the reminder period set by the user has elapsed, and a message 38 illustrated in Fig. 21 is displayed on the display screen 21, the user can more successfully become aware of the website that the user has not accessed in a predetermined time period.

It should be noted that timing to display the message 38 does not have to be timing the reminder period has elapsed. The timing may be any timing, and may be, for example, timing when the user inputs an instruction to display the calendar 33 or the favorites display screen after the reminder period has elapsed. Further, it is possible to inform the user, by sounds, light, or vibration, that the reminder period has elapsed. It is possible to realize a function of generating sounds, light, or vibration, by using an arrangement provided to the mobile phone 1 in advance to detect an incoming call, or the like.

Further, in the mobile phone 1, it is preferable to have an arrangement in which the user can set a time and date when the reminder is presented to the user. By setting the time and date when the reminder is presented to the user, it becomes possible for the user to confirm, at the predetermined timing, all the websites that the user has not accessed in the predetermined time period, at once.

For example, in a case where the user sets such that the reminder is presented to the user at 9:00 on December 11, 20xx, such websites that the reminder period has elapsed at the time are displayed on the display screen at the time.

Further, in the mobile phone 1, it is possible to display, at predetermined intervals, a list of the time periods each of which elapsed since the last time and date the mobile phone 1 was connected to each of the websites registered in the favorites list. This allows the user to periodically check how often the mobile phone 1 was connected to each of the websites registered in the favorites list. Thereby, it is possible to prevent the user from forgetting to update a website or post a comment on a website.

The following description explains an arrangement and an operation of the mobile phone 1 with reference to Fig. 1, which arrangement and operation realize such a setting of the reminder. In the mobile phone 1 of the present modified example, the reminder period is stored in the favorites management table 15 so that the reminder period of each of the websites is associated with the title of each of the websites.

The control section 6 starts to measure the reminder period set by the user, by use of a timer (measurement means) (not illustrated), when the reminder period is set for a website. The control section 6 determines whether or not the reminder period set by the user has elapsed, by referring to the timer. If the control section determines the reminder period has elapsed, the control section 6 transmits an instruction to the display processing section 9 and the display section 12, so as to cause the display screen 21 to display the reminder information 37.

It should be noted that, in a case where the reminder information 37 is displayed with the calendar 33, as illustrated in Fig. 19, the control section 6 causes the calendar 33 and the reminder information 37 to be displayed together when receiving an instruction to display the calendar 33 after determining the reminder period has elapsed.

It should be noted that the reminder information 37 to be displayed is not limited, as long as the reminder information 37 can allow the user to become aware that the reminder period has elapsed. It is possible to have an arrangement in which an arbitral message is stored in the general-purpose memory 5 in advance, and in a case where the reminder period has elapsed, the control section 6 reads out such a message from the general-purpose memory 5.

For example, a message of "there is a website that you have not accessed in the predetermined time period" is stored, and in a case where the reminder period has elapsed, this message is displayed. This allows the user to become aware that there is a website that the user has not accessed for a long time.

Further, as the reminder information 37, as illustrated in Figs. 19 and 20, it is preferable to display the title of the website and the last date when the mobile phone 1 was connected to the website. This allows the user to recognize at once how long the user has not accessed which website. It should be noted that the title of the website and the last date when the mobile phone 1 was connected to the website may be read out from the favorites management table 15.

The present invention is not limited to the description of the embodiments above, but may be altered by a skilled person within the scope of the claims. An embodiment based on a proper combination of technical means disclosed in different embodiments is encompassed in the technical scope of the present invention.

Finally, each of the blocks of the mobile phone 1, particularly the control section 6, may be constituted by hardware logic, or realized by software, such as a CPU, as described below.

That is, the mobile phone 1 includes: a CPU (central processing unit) for executing an instruction of a control program which realizes each of the functions; a ROM (read only memory) in which the program is stored; an RAM (random access memory) for developing the program; a storage device (storage medium) for storing the program and various data, such as a memory; and the like. An object of the present invention can be achieved by (i) providing, to the mobile phone 1, a computer-readable storage medium in which a program code (an execute form program, intermediate code program, or source program) of the control program of the mobile phone 1 is stored, which program code is software for realizing the functions described above, and (ii) a computer (or CPU or MPU) of the mobile phone 1 reads out the program code stored in the storage medium, and execute the program code.

Examples of the storage medium which satisfies these conditions include: tapes, such as magnetic tapes and cassette tapes; disks including magnetic disks, such as floppy disks (registered trademark) and hard disks, and optical disks, such as CD-ROMs, magnetic optical disks (MOs), mini disks (MDs), digital video disks (DVDs), and CD-Rs; cards, such as IC cards (including memory cards) and optical cards; and semiconductor memories, such as mask ROMs, EPROMs, EEPROMs, and flash ROMs.

Further, it is possible to have an arrangement in which the mobile phone 1 is made connectable to communication networks, and the program code is supplied via the communication networks. The communication networks are not limited to specific means. Specific examples of the communication network include the Internet, an intranet, an extranet, a LAN, an ISDN, a VAN, a CATV communication network, a virtual private network, a telephone line network, a mobile communication network, a satellite communication network, and the like. Further, a transmission medium constituting the communication network is not particularly limited. Specifically, it is possible to use a wired line such as a line in compliance with an IEEE1394 standard, a USB line, a power line, a cable TV line, a telephone line, an ADSL line, and the like, as the transmission medium. Further, it is possible to use (i) a wireless line utilizing an infrared ray used in IrDA and a remote controller, (ii) a wireless line which is in compliance with a Bluetooth standard (registered trademark) or an IEEE802.11 wireless standard, and (iii) a wireless line utilizing an HDR, a mobile phone network, a satellite line, a ground wave digital network, and the like, as the transmission medium. Note that, the present invention can be realized by a computer data signal which is realized by electronic transmission of the program code and which is embedded in a carrier wave.

As described above, a controlling method of the present invention, employs a communication terminal device, the communication terminal device including: a storage section in which last dates or last times and dates when the communication terminal device was connected to the respective websites specified by the respective pieces of site specifying information are stored so that the respective pieces of site specifying information and the respective last dates or the respective last times and dates when the communication terminal device was connected to the respective websites are associated with each other; selection means for causing a user of the communication terminal device to select, among the pieces of the site specifying information, one of the pieces of site specifying information specifying a website to which the communication terminal device is to be connected; and control means for causing (i) the pieces of the site specifying information and (ii) a last date or a last time and date of only a candidate website which is specified by the one of the pieces of site specifying information selected by the selection means, to be displayed together.

Further, as described above, a communication terminal device of the present invention includes: a storage section in which last dates or last times and dates when the communication terminal device was connected to the respective websites specified by the respective pieces of site specifying information are stored so that the respective pieces of site specifying information and the respective last dates or the respective last times and dates when the communication terminal device was connected to the respective websites are associated with each other; selection means for causing a user of the communication terminal device to select, among the pieces of the site specifying information, one of the pieces of site specifying information specifying a website to which the communication terminal device is to be connected; clocking means for clocking a current date or a current time and date; and control means for causing (i) the pieces of the site specifying information and (ii) elapsed time period information to be displayed together, the elapsed time period information being obtained by finding, at predetermined timing, a difference between (a) a last date or a last time and date when the communication terminal device was connected to a candidate website which is specified by the one of the pieces of site specifying information selected by the selection means and (b) the current date or the current time and date, which is clocked by the clocking means, respectively.

Furthermore, as described above, a communication terminal device of the present invention includes: a storage section in which (i) last dates or last times and dates when the communication terminal device was connected to the respective websites specified by the respective pieces of site specifying information are stored so that the respective pieces of site specifying information and the respective last dates or the respective last times and dates when the communication terminal device was connected to the respective websites are associated with each other, and (ii) writer specifying information specifying a user, in a case where the user of the communication terminal device carries out writing on one of the websites specified by the respective pieces of site specifying information, is stored so that each of the pieces of site specifying information and the writer specifying information are associated with each other; and control means for causing (i) the writer specifying information and (ii) elapsed time period information to be displayed together, the elapsed time period information being obtained by finding, at predetermined timing, a difference between (a) a last date or a last time and date of a website which is specified by the writer specifying information and (b) a current date or a current time and date, respectively.

Further, as described above, a communication terminal device of the present invention includes: a storage section in which last dates or last times and dates when a user of the communication terminal device carried out writing on the respective websites specified by the respective pieces of site specifying information are stored so that the respective pieces of site specifying information and the respective last dates or the respective last times and dates when the user carried out writing on the respective websites are associated with each other; and control means for causing (i) the pieces of site specifying information and (ii) the last dates or the last times and dates when the user carried out writing on the respective websites specified by the respective pieces of site specifying information, to be displayed together.

Furthermore, as described above, a communication terminal device of the present invention includes: a storage section in which dates when the communication terminal device was connected to the respective websites specified by the respective pieces of site specifying information are stored so that the respective pieces of site specifying information and the respective dates when the communication terminal device was connected to the respective websites are associated with each other; selection means for causing a user of the communication terminal device to select, among the pieces of the site specifying information, one of the pieces of site specifying information specifying a website to which the communication terminal device is to be connected; and control means for causing dates when the communication terminal device was connected to a candidate website specified by the one of the pieces of site specifying information selected by the selection means to be displayed in a form of calendar.

Accordingly, with the communication terminal device of the present invention, it is possible for the user to easily confirm, without accessing the website, (i) the last date when the communication terminal device was connected to the website, (ii) the last time and date when the communication terminal device was connected to the website, (iii) the last time and date when the user carried out writing on the website, or (iv) the time period that elapsed since the last time and date when the user carried out writing on the website. Therefore, it is possible to prevent the user from forgetting to post a comment on the website, or update the website.

Further, the control means preferably causes the selection means to be displayed in accordance with the elapsed time period information of the candidate website which is specified by the one of the pieces of site specifying information selected by the selection means.

With the arrangement, the selection means is displayed in accordance with the time period that elapsed since the last time and date when the communication terminal device was connected to the website. Thereby, it becomes easier for the user of the communication terminal device to become aware how long the communication terminal device has not accessed the website since the last time and date when the communication terminal device was connected to the website.

Furthermore, continuous display information indicating whether or not the elapsed time period information is capable of being continuously displayed is preferably stored in the storage section so that each of the pieces of site specifying information and the continuous display information are associated with each other, and the control means preferably causes continuous displaying of the elapsed time period information of a website specified by a corresponding one of the pieces of site specifying information which is associated with the continuous display information indicating that the elapsed time period information is capable of being continuously displayed.

With the arrangement, the elapsed time period information of the website specified by the site specifying information associated with the continuous display information indicating the elapsed time period information is capable of being continuously displayed, is displayed continuously. Thereby, it is possible to reduce a risk that the user of the communication terminal device does not become aware of a website to which the communication terminal device has not been connected for a long time.

The time period that elapsed since the last time and date when the communication terminal device was connected to the website may be displayed, for example, in a pict line of a display screen. The pict line is generally positioned in an uppermost part of a display screen of a communication terminal device, and is a region for displaying, for example, information on a current state of the communication terminal device, such as a remaining battery level, and an incoming signal strength. The pict line is displayed continuously in a various operation state (a standby state, a state for a call, a state where the communication terminal device is connected to the Internet, a state for an e-mail) of the communication terminal device. Therefore, the pict line is suitable for displaying the time period that elapsed since the last time and date when the communication terminal device was connected to the website.

Further, writable/non-writable information indicating whether or not writing is possible on each of the websites specified by the respective pieces of site specifying information is preferably stored in the storage section so that each of the pieces of site specifying information and the writable/non-writable information are associated with each other, and the control means preferably causes (i) at least one of the pieces of site specifying information which is associated with the writable/non-writable information indicating that writing is possible and (ii) the others of the pieces of site specifying information to be separately displayed.

There are websites on which writing can be carried out, such as a blog and an electric bulletin board, and the other websites on which writing cannot be carried out. Here, for the websites on which the user can carry out writing, such as a blog or an electronic bulletin board, it is necessary for the user to (i) manage the time period that elapsed since the last time and date when the user established a connection with the website, and (ii) access the website constantly.

With the arrangement, the site specifying information of the website on which the user can carry out writing, and the site specifying information of the other websites are displayed separately. Thereby, it is possible for the user to easily manage the time period that elapsed since the last time and date when the communication terminal device was connected to such a writable website.

Note that site specifying information may be displayed in such a manner that, for example, the display screen is divided into two pieces, and the site specifying information of writable websites is displayed in one piece, and the site specifying information of the other websites is displayed in the other piece. Further, it is also possible to display the site specifying information of the writable websites in a color different from a color in which the site specifying information of the other websites is displayed.

Further, writer specifying information specifying a user, in a case where the user of the communication terminal device carries out writing on one of the websites specified by the respective pieces of site specifying information, is preferably stored in the storage section so that each of the pieces of site specifying information and the writer specifying information are associated with each other, and the control means preferably causes the pieces of site specifying information and the writer specifying information to be displayed together.

As described above, in a case where writing is carried out on the website such as an electronic bulletin board and a blog, it is common that a nickname (handle name) is used as the writer specifying information for specifying a writer. Further, a plurality of nicknames are often used for a plurality of websites independently.

However, in a case where a user uses different nicknames for respective websites, the user, in some cases, forgets which nickname is used on which website. Conventionally, if the user forgets his nickname used on a certain website, it is necessary for the user to check his website by accessing the certain website.

Here, with the arrangement described above, the site specifying information and the writer specifying information are displayed together, so that it is possible for the user to easily confirm, without accessing each of the websites, which writer specifying information (nickname, for example) is used on which website.

Further, the control means preferably causes, in a case where the communication terminal device is connected to one of the websites specified by the respective pieces of site specifying information, (i) the elapsed time period information of the one of websites thus connected and (ii) a web page of the one of the websites to be displayed together.

With the arrangement, the elapsed time period information of the website thus connected and the web page of the website are displayed together. Thereby, the user of the communication terminal device can view a web page while confirming the time period that elapsed since the last time and date when the communication terminal device was connected to the website thus connected, and can carry out writing if necessary.

Further, in a case where the website thus connected is a writable website, it is preferable to display not only the elapsed time period information but also: the time and date when the user carried out writing on the website; a content of the writing; a nickname used by the user on the website; and the like. This allows the user to further confirm details of previous information on the website.

Further, e-mail addresses of the respective websites are preferably stored in the storage section so that the pieces of the site specifying information and the respective e-mail addresses are associated with each other, and the control means preferably causes, in a case where an e-mail address of a sender of an e-mail received by the communication terminal device is identical with one of the e-mail addresses stored in the storage section, displaying of the elapsed time period information of a corresponding one of the websites which is specified by a corresponding one of the pieces of site specifying information corresponding to the e-mail address.

It has become popular that a writable website, such as an electronic bulletin board or a blog, has a function of sending an e-mail indicating a content of writing to a communication terminal device or the like, in a case where, for example, another user carries out writing on the electronic bulletin board or the blog.

Here, with the arrangement described above, in a case where the communication terminal device receives an e-mail from the website, the elapsed time period information of the website is displayed. Accordingly, it is possible for the user to confirm a content of the e-mail while confirming what had been going on the website by the time the e-mail was sent to the communication terminal device.

Further, in a case where the website connected to the communication terminal device is a writable website, it is preferable to display not only the elapsed time period information but also the time and date when the user carried out writing on the website, the content of the writing, the nickname used by the user on the website, and the like. This allows the user to further confirm details of previous information on the website.

Further, the communication terminal device preferably further includes selection means for causing a user of the communication terminal device to select, among the pieces of the site specifying information, one of the pieces of site specifying information specifying a website to which the communication terminal device is to be connected, the control means for causing (i) the pieces of the site specifying information and (ii) only a last date or a last time and date when the user carried out writing on a candidate website which is specified by the one of the pieces of site specifying information selected by the selection means to be displayed together.

With the arrangement, only the last time and date when the user carried out writing on the candidate website specified by the site specifying information selected by the selection means is displayed. Therefore, even in a case where the display screen of the communication terminal device is small, the user can view the last time and date when the user carried out writing on the website at ease.

Further, (i) dates or (ii) times and dates when the user carried out writing on the respective websites specified by the respective pieces of site specifying information in a predetermined time period, and (iii) contents which are written by the user on the respective dates or the respective times and dates are preferably stored in the storage section so that the pieces of site specifying information, and the respective dates or the respective times and dates when the user carried out writing on the respective websites and the respective contents are associated with each other, and the control means preferably causes displaying of (i) the pieces of site specifying information, (ii) the dates or the times and dates when the user carried out writing on the respective websites, and (iii) the respective contents.

As described above, with the conventional technique, it has been possible to read out a history of previous access to a certain website, but it has been impossible to know a previous situation of the website.

Here, in a case where the user carries out writing on the website, it is preferable for the user to carry out the writing while confirming (i) when the user carried out the writing on the website in the past, and (ii) what comment the user posted on the website, for example. In other words, it is preferable for the user to carry our writing while confirming previous information on the website. That is, the user can easily confirm such information so that the user can carry out writing more smoothly.

With the arrangement, the site specifying information, the date or the time and date when the user carried out writing, and the content of the writing are displayed together. This allows the user of the communication terminal device to easily confirm, without accessing the website, when the user posted what comment on the website specified by the site specifying information.

Further, the communication terminal device preferably further includes history obtaining means for storing in the storage section dates, when the respective websites specified by the respective pieces of site specifying information stored in the storage section, were updated so that (i) the pieces of site specifying information specifying the respective websites and (ii) the dates when the websites specified by the respective pieces of site specifying information were updated are associated with each other, the control means causing a calendar to be displayed, the pieces of site specifying information of the respective websites which were updated being displayed on the dates on the calendar on which dates the respective websites were updated.

With the arrangement, the site specifying information of the website thus updated is displayed, on the calendar, on the date on which the website was updated. Therefore, the user can easily confirm when and which website was updated.

Thereby, the user can refer to the date on which the website was updated, when the user updates the website or posts a comment on the website. Therefore, the user can smoothly update the website or post a comment on the website.

Here, the update of the website means (i) the website itself was updated, and (ii) a registration of the website in the communication terminal device was updated. For example, the aforementioned (i) may be such a situation that the website was updated by the administrator, or writing was carried out on the website. Further, for example, the aforementioned (ii) may be such a situation that the site specifying information of the website was stored in the storage section of the communication terminal device.

It should be noted that the date on which the site specifying information was stored in the storage section of the communication terminal device may be obtained when the site specifying information was stored in the storage section. Further, the date on which the website was updated may be obtained when, for example, the communication terminal device receives an e-mail indicating the update of the website from the website. Note that, in this case, it is necessary for the communication terminal device to include means for receiving an e-mail, and it is necessary for the website to have a function of sending an e-mail to the communication terminal device. The date on which the user carried out writing on the website may be obtained when the user carried out writing on the website.

Further, pieces of update content information indicating updated contents of the respective websites specified by the respective pieces of site specifying information stored in the storage section are preferably stored in the storage section so that the pieces of site specifying information and the respective pieces of update content information are associated with each other, the pieces of site specifying information on the calendar are preferably displayed and are capable of being selected by the user of the communication terminal device, and the control means preferably causes, in a case where one of the pieces of site specifying information displayed on the calendar is selected, a corresponding one of the pieces of update content information of a corresponding one of the websites specified by the respective pieces of site specifying information thus selected to be displayed, the corresponding one of the pieces of update content information being stored in the storage section.

With the arrangement, the user can cause the update content information to be displayed by selecting, on the calendar, the site specifying information for which the user hopes to confirm the update content information. This allows the user to easily confirm the content of the update of the website. Thus, the user can smoothly update the website or post a comment on the website, by confirming the content of the update.

It should be noted that the update content information is information indicating, for example, (i) a relationship between the user and the website had a change (for example, the site specifying information of the website was stored in the storage section), (ii) the website was updated by the administrator of the website, or (iii) the user carried out writing on the website. The control means causes such content update information to be displayed by use of texts or images.

Further, the update content information may be displayed such that the update content information of only a date selected on the calendar is displayed, or among the update content information of the website specified by the site specifying information thus selected, only update content information displayed on the calendar is displayed. Further, it is possible to display a list of all the update content information stored in the storage section specified by the site specifying information.

Further, period information indicating a predetermined period is preferably stored in the storage section so that the respective pieces of site specifying information and the period information are associated with each other, and the communication terminal device preferably informs the user that periods in which the communication terminal device has not accessed the respective websites exceed the predetermined period, by referring to (i) the elapsed time period information being obtained by finding differences between (a) the last dates or the last times and dates when the communication terminal device was connected to the respective websites specified by the respective pieces of site specifying information, and (b) the current date or the current time and date, which is clocked by the clocking means, respectively, and (iii) the period information.

With the arrangement, the user is informed that the time period that elapsed in which the communication terminal device has not been connected to the website exceeded the predetermined time period. Thereby, the user can easily become aware that there is a website to which the communication terminal device has not been connected in a long time. Therefore, with the arrangement, it is possible to prevent more successfully the user from forgetting to post a comment on the website or update the website.

Note that the period information is preferably arranged such that the user can arbitrarily set or change the period information for each website. This makes it possible for the user manage, at desired intervals, a connection between each connection between the communication terminal device and each of the websites at intervals. Further, it is possible to inform that the predetermined time period has elapsed right after the predetermined time period has elapsed, or at a time and date the user has set in advance.

A method of informing the user that the predetermined time period elapsed is not particularly limited. It is possible to inform the user that the predetermined time period has elapsed, by displaying an image, a text, or a mark indicating the predetermined time period has elapsed, for example. Further, it is also possible to inform the user that the predetermined time period has elapsed by using sounds, light, or vibration, or combining these.

Here, in a case where the user is informed, by displaying of an image, a text, or a symbol, that the predetermined time period has elapsed, it is possible to arrange such that the image or the like is displayed when the user carried out a predetermined operation after the predetermined time period has elapsed. Here, the predetermined operation means an operation function as a trigger for displaying the image or the like informing that the predetermined time period has elapsed. The predetermined operation is not particularly limited, but is preferably an operation related to management or browse of a website, such as an operation for displaying the calendar, an operation for displaying the site specifying information, or an operation for establishing a connection with the Internet.

Note that the communication terminal device can be realized by a computer, and in this case, a control program for realizing the communication terminal device by causing the computer to function as each means of the communication terminal device, and a computer-readable storage medium in which the control program is stored are included within a scope of the present invention.

The embodiments and concrete examples of implementation discussed in the foregoing detailed explanation serve solely to illustrate the technical details of the present invention, which should not be narrowly interpreted within the limits of such embodiments and concrete examples, but rather may be applied in many variations within the spirit of the present invention, provided such variations do not exceed the scope of the patent claims set forth below.

### Industrial Applicability

According to the present invention, it is possible for a user to easily confirm a time period that elapsed since the last time when the user visited a website registered in a favorites list. Therefore, the present invention is applicable to a terminal connectable to the Internet, which terminal allows the user to view a website or post a comment on a website. Specifically, the present invention is suitably applicable to a personal computer, a PDA, a PHS, and a mobile phone, particularly, a mobile phone including a small display screen, a PHS including a small display screen, and the like.

## Claims

1. A communication terminal device comprising:
a storage section in which (i) addresses of respective websites and pieces of site specifying information specifying the respective websites are stored so that the addresses and the respective pieces of site specifying information are associated with each other, and (ii) last dates or last times and dates when the communication terminal device was connected to the respective websites specified by the respective pieces of site specifying information are stored so that the respective pieces of site specifying information and the respective last dates or the respective last times and dates when the communication terminal device was connected to the respective websites are associated with each other;
selection means for causing a user of the communication terminal device to select, among the pieces of the site specifying information, one of the pieces of site specifying information specifying a website to which the communication terminal device is to be connected; and
control means for causing (i) the pieces of the site specifying information and (ii) a last date or a last time and date of only a candidate website which is specified by the one of the pieces of site specifying information selected by the selection means, to be displayed together,
the communication terminal device establishing a connection with one of the websites which is specified in accordance with a corresponding one of the addresses which is associated with a corresponding one of the pieces of site specifying information, in a case where the corresponding one of the pieces of site specifying information is selected.

2. A communication terminal device comprising:
a storage section in which (i) addresses of respective websites and pieces of site specifying information specifying the respective websites are stored so that the addresses and the respective pieces of site specifying information are associated with each other, and (ii) last dates or last times and dates when the communication terminal device was connected to the respective websites specified by the respective pieces of site specifying information are stored so that the respective pieces of site specifying information and the respective last dates or the respective last times and dates when the communication terminal device was connected to the respective websites are associated with each other;
selection means for causing a user of the communication terminal device to select, among the pieces of the site specifying information, one of the pieces of site specifying information specifying a website to which the communication terminal device is to be connected;
clocking means for clocking a current date or a current time and date; and
control means for causing (i) the pieces of the site specifying information and (ii) elapsed time period information to be displayed together, the elapsed time period information being obtained by finding, at predetermined timing, a difference between (a) a last date or a last time and date when the communication terminal device was connected to a candidate website which is specified by the one of the pieces of site specifying information selected by the selection means and (b) the current date or the current time and date, which is clocked by the clocking means, respectively,
the communication terminal device establishing a connection with one of the websites which is specified in accordance with a corresponding one of the addresses which is associated with a corresponding one of the pieces of site specifying information, in a case where the corresponding one of the pieces of site specifying information is selected.

3. The communication terminal device according to claim 2, wherein:
the control means causes the selection means to be displayed in accordance with the elapsed time period information of the candidate website which is specified by the one of the pieces of site specifying information selected by the selection means.

4. The communication terminal device according to claim 2 or 3, wherein:
continuous display information indicating whether or not the elapsed time period information is capable of being continuously displayed is stored in the storage section so that each of the pieces of site specifying information and the continuous display information are associated with each other; and
the control means causes continuous displaying of the elapsed time period information of a website specified by a corresponding one of the pieces of site specifying information which is associated with the continuous display information indicating that the elapsed time period information is capable of being continuously displayed.

5. The communication terminal device according to any one of claims 1 through 4, wherein:
writable/non-writable information indicating whether or not writing is possible on each of the websites specified by the respective pieces of site specifying information is stored in the storage section so that each of the pieces of site specifying information and the writable/non-writable information are associated with each other; and
the control means causes (i) at least one of the pieces of site specifying information which is associated with the writable/non-writable information indicating that writing is possible and (ii) the others of the pieces of site specifying information to be separately displayed.

6. The communication terminal device according to any one of claims 1 through 5, wherein:
writer specifying information specifying a user, in a case where the user of the communication terminal device carries out writing on one of the websites specified by the respective pieces of site specifying information, is stored in the storage section so that each of the pieces of site specifying information and the writer specifying information are associated with each other; and
the control means causes the pieces of site specifying information and the writer specifying information to be displayed.

7. A communication terminal device comprising:
a storage section in which (i) addresses of respective websites and pieces of site specifying information specifying the respective websites are stored so that the addresses and the respective pieces of site specifying information are associated with each other, (ii) last dates or last times and dates when the communication terminal device was connected to the respective websites specified by the respective pieces of site specifying information are stored so that the respective pieces of site specifying information and the respective last dates or the respective last times and dates when the communication terminal device was connected to the respective websites are associated with each other, and (iii) writer specifying information specifying a user, in a case where the user of the communication terminal device carries out writing on one of the websites specified by the respective pieces of site specifying information, is stored so that each of the pieces of site specifying information and the writer specifying information are associated with each other; and
control means for causing (i) the writer specifying information and (ii) elapsed time period information to be displayed together, the elapsed time period information being obtained by finding, at predetermined timing, a difference between (a) a last date or a last time and date of a website which is specified by the writer specifying information and (b) a current date or a current time and date, respectively,
the communication terminal device establishing a connection with one of the websites which is specified in accordance with a corresponding one of the addresses which is associated with a corresponding one of the pieces of site specifying information, in a case where the corresponding one of the pieces of site specifying information is selected.

8. The communication terminal device according to any one of claims 2 through 7, wherein:
the control means causes, in a case where the communication terminal device is connected to one of the websites specified by the respective pieces of site specifying information, (i) the elapsed time period information of the one of websites thus connected and (ii) a web page of the one of the websites to be displayed together.

9. The communication terminal device according to any one of claims 2 through 8, wherein:
e-mail addresses of the respective websites are stored in the storage section so that the respective pieces of the site specifying information and the respective e-mail addresses are associated with each other; and
the control means causes, in a case where an e-mail address of a sender of an e-mail received by the communication terminal device is identical with one of the e-mail addresses stored in the storage section, displaying of the elapsed time period information of a corresponding one of the websites which is specified by a corresponding one of the pieces of site specifying information corresponding to the e-mail address.

10. A communication terminal device comprising:
a storage section in which (i) addresses of respective websites and pieces of site specifying information specifying the respective websites are stored so that the addresses and the respective pieces of site specifying information are associated with each other, and (ii) last dates or last times and dates when a user of the communication terminal device carried out writing on the respective websites specified by the respective pieces of site specifying information are stored so that the respective pieces of site specifying information and the respective last dates or the respective last times and dates when the user carried out writing on the respective websites are associated with each other; and
control means for causing (i) the pieces of site specifying information and (ii) the last dates or the last times and dates when the user carried out writing on the respective websites specified by the respective pieces of site specifying information, to be displayed together,
the communication terminal device establishing a connection with one of the websites which is specified in accordance with a corresponding one of the addresses which is associated with a corresponding one of the pieces of site specifying information, in a case where the corresponding one of the pieces of site specifying information is selected.

11. The communication terminal device according to claim 10, further comprising selection means for causing a user of the communication terminal device to select, among the pieces of the site specifying information, one of the pieces of site specifying information specifying a website to which the communication terminal device is to be connected,
the control means causing (i) the pieces of the site specifying information and (ii) only a last date or a last time and date when the user carried out writing on a candidate website which is specified by the one of the pieces of site specifying information selected by the selection means to be displayed together.

12. The communication terminal device according to claim 10 or 11, wherein:
(i) dates or times and dates when the user carried out writing on the respective websites specified by the respective pieces of site specifying information in a predetermined period, and (ii) contents which are written by the user on the respective dates or the respective times and dates are stored in the storage section so that the respective pieces of site specifying information, and the dates or the respective times and dates when the user carried out writing on the respective websites and the respective contents are associated with each other; and
the control means causes displaying of (i) the pieces of site specifying information, (ii) the dates or the times and dates when the user carried out writing on the respective websites, and (iii) the respective contents.

13. A communication terminal device comprising:
a storage section in which (i) addresses of respective websites and pieces of site specifying information specifying the respective websites are stored so that the addresses and the respective pieces of site specifying information are associated with each other, and (ii) dates when the communication terminal device was connected to the respective websites specified by the respective pieces of site specifying information are stored so that the respective pieces of site specifying information and the dates when the communication terminal device was connected to the respective websites are associated with each other;
selection means for causing a user of the communication terminal device to select, among the pieces of the site specifying information, one of the pieces of site specifying information specifying a website to which the communication terminal device is to be connected; and
control means for causing dates when the communication terminal device was connected to a candidate website specified by the one of the pieces of site specifying information selected by the selection means to be displayed in a form of calendar,
the communication terminal device establishing a connection with one of the websites which is specified in accordance with a corresponding one of the addresses which is associated with a corresponding one of the pieces of site specifying information, in a case where the corresponding one of the pieces of site specifying information is selected.

14. The communication terminal device according to any one of claims 1 through 13, further comprising history obtaining means for storing in the storage section dates, when the respective websites specified by the respective pieces of site specifying information stored in the storage section, were updated so that (i) the respective pieces of site specifying information specifying the respective websites and (ii) the dates when the websites specified by the respective pieces of site specifying information were updated are associated with each other,
the control means causing a calendar to be displayed, the pieces of site specifying information of the respective websites which were updated being displayed on the dates on the calendar on which dates the respective websites were updated.

15. The communication terminal device according to claim 14, wherein:
pieces of update content information indicating updated contents of the respective websites specified by the respective pieces of site specifying information stored in the storage section are stored in the storage section so that the respective pieces of site specifying information and the respective pieces of update content information are associated with each other;
the pieces of site specifying information on the calendar are displayed and are capable of being selected by the user of the communication terminal device; and
the control means causes, in a case where one of the pieces of site specifying information displayed on the calendar is selected, a corresponding one of the pieces of update content information of a corresponding one of the websites specified by the respective pieces of site specifying information thus selected to be displayed, the corresponding one of the pieces of update content information being stored in the storage section.

16. The communication terminal device according to any one of claims 2 through 4, wherein:
period information indicating a predetermined period is stored in the storage section so that the respective pieces of site specifying information and the period information are associated with each other; and
the communication terminal device informs the user that periods in which the communication terminal device has not accessed the respective websites exceed the predetermined period, by referring to (i) the elapsed time period information being obtained by finding differences between (a) the last dates or the last times and dates when the communication terminal device was connected to the respective websites specified by the respective pieces of site specifying information, and (b) the current date or the current time and date, which is clocked by the clocking means, respectively, and (ii) the period information.

17. A control program for causing a computer to function as each of the means of a communication terminal device recited in any one of claims 1 through 16.

18. A computer-readable storage medium in which a control program recited in claim 17 is stored.
